(19) Europäisches Patentamt
European Patent Office
Office européen des brevets

(11) EP 0 421 933 B1

(12) **EUROPÄISCHE PATENTSCHRIFT**

(45) Veröffentlichungstag und Bekanntmachung des Hinweises auf die Patenterteilung:
**12.06.1996 Patentblatt 1996/24**

(21) Anmeldenummer: **90810742.8**

(22) Anmeldetag: **27.09.1990**

(51) Int Cl.[6]: **C08K 13/02**, C08L 57/08, C08L 27/06
// (C08K13/02, 3:00, 3:26, 5:3435), (C08K13/02, 3:26, 5:09, 5:3435)

# (54) Stabilisierte chlorhaltige Polymerzusammensetzungen

Stabilized chlorinated polymer compositions

Compositions de polymères chlorés stabilisées

(84) Benannte Vertragsstaaten:
**BE DE FR GB IT NL**

(30) Priorität: **06.10.1989 CH 3653/89**

(43) Veröffentlichungstag der Anmeldung:
**10.04.1991 Patentblatt 1991/15**

(73) Patentinhaber: **CIBA-GEIGY AG**
**CH-4002 Basel (CH)**

(72) Erfinder:
- **Sander, Hans Jürgen**
  **W-6143 Lorsch (DE)**
- **Hartmann, Olaf-René**
  **W-6140 Bensheim 2 (DE)**
- **Wirth, Hermann O., Dr.**
  **W-6140 Bensheim 3 (DE)**

(56) Entgegenhaltungen:
**EP-A- 0 344 321** **JP-A-63 175 072**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 421 933 B1

## Beschreibung

Die Erfindung betrifft neue chlorhaltige Polymerzusammensetzungen und die Verwendung der Polymerzusammensetzungen.

Beispielsweise aus der JP-A-63/175 072 ist bekannt, Folien für Agrikulturzwecke aus weichgemachtem Polyvinylchlorid mit einem sterisch gehinderten Amin und einem Hydrotalcit gegen den Einfluss von Pestiziden zu stabilisieren.

Aus der JP-A 63/178 155 sind Hart-PVC-Mischungen bekannt, die mit einem metallhaltigen Stabilisator, einer Epoxyverbindung, die bei Normaltemperatur fest ist, und einer gehinderten Piperidinverbindung stabilisiert sind.

Aus der EP-A 0 237 485 sind stabilisierte Hart-PVC-Zusammensetzungen bekannt, die mindestens einen 2,2,6,6-Tetraalkylpiperidin-Lichtstabilisator und mindestens einen Organozinn-Stabilisator enthalten.

Aus der EP-A 0 063 180 ist eine Stabilisatorzusammensetzung für halogenhaltige Polymere bekannt, bestehend aus β-Diketonen und einem Hydrotalcit.

Aus der EP-A 0 344 321 sind stabilisierte Polymer-Zusammensetzungen bekannt, die eine Verbindung mit einem Piperidyl-Rest sowie weitere Stabilisatoren enthalten.

Die bekannten Stabilisatoren und Stabilisatorgemische können in den Polymeren nicht allen gestellten Anforderungen entsprechen.

Es wurde nun gefunden, dass die chlorhaltigen Polymerzusammensetzungen, stabilisiert nach vorliegender Erfindung, weiter verbesserte Eigenschaften bezüglich der Thermo- und Lichtstabilität aufweisen.

Erfindungsgemäss wird das mit einer Polymerzusammensetzung mit oder ohne Weichmacher erreicht, enthaltend ein chlorhaltiges Polymer und ein Stabilisatorgemisch, enthaltend:

a) mindestens ein cyclisches oder nicht cyclisches sterisch gehindertes Amin, wobei in weichmacherhaltigen Polymerzusammensetzungen die Verbindung der Formel

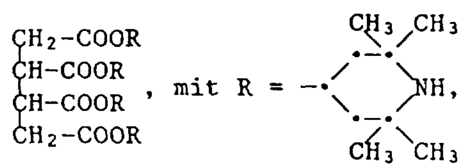
, mit R =

ausgeschlossen ist,

b) mindestens eine organische Zinkverbindung und/oder anorganische Zinkverbindung der Reihe der Carbonate, Chloride, Sulfate, Oxide, Hydroxide, der basischen Oxide und Mischoxide, und

c) mindestens eine Verbindung aus der Reihe der Hydrotalcite ausgenommen eine Zusammensetzung, welche ein Bariumphenolat enthält.

Die erfindungsgemässen Polymerzusammensetzungen können weitere Komponenten enthalten.

So kann die Polymerzusammensetzung als weiteren Stabilisator

d) mindestens ein 1,3-Diketon enthalten.

Die Polymerzusammensetzung kann als weiteren Stabilisator

e) mindestens eine organische oder anorganische Calciumverbindung enthalten.

Im Umfange vorliegender Erfindung liegen demnach z.B. auch Polymer-zusammensetzungen, wie vorbeschrieben, enthaltend im Stabilisatorgemisch eine oder beide der Komponenten d) und e). Demnach werden Polymerzusammensetzungen von vorliegender Erfindung umfasst, welche im Stabilisatorengemisch die Komponenten a), b) und c) oder beispielsweise a), b), c) und d) oder a), b), c) und e) oder a), b), c), d) und e) enthalten.

Zweckmässig sind Polymerzusammensetzungen, wie vorbeschrieben, enthaltend im Stabilisatorgemisch als a) mindestens ein cyclisches sterisch gehindertes Amin, insbesondere eine Verbindung aus der Reihe der Derivate von Polyalkylpiperidinen die mindestens eine Gruppe der Formel III

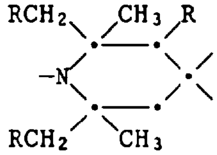
(III)

worin R Wasserstoff oder Methyl ist, enthalten; vorzugsweise sind die Polyalkylpiperidingruppen der Formel III in 4-Stellung mit einem oder zwei polaren Substituenten oder einen polaren Spiro-Ringsystem substituiert.

Zweckmässig sind Polymerzusammensetzungen, wie oben beschrieben, enthaltend als b) mindestens eine organische Zinkverbindung aus der Reihe der aliphatischen gesättigten $C_2$-$C_{22}$-Carboxylate, der aliphatischen olefinischen $C_3$-$C_{22}$-Carboxylate, der aliphatischen $C_2$-$C_{22}$-Carboxylate, die mit wenigstens einer OH-Gruppe substituiert sind, der cyclischen und bicyclischen Carboxylate mit 5-22 C-Atomen, der aromatischen $C_7$-$C_{22}$-Carboxylate, der mit wenigstens einer OH-Gruppe substituierten aromatischen $C_7$-$C_{22}$-Carboxylate, der $C_1$-$C_{16}$-alkylsubstituierten Phenylcarboxylate, der Phenyl-$C_1$-$C_{16}$-alkylcarboxylate, der $C_6$-$C_{18}$-Phenolate, der $C_5$-$C_{26}$-Chelate von 1,3-Diketonen oder β-Ketocarbonsäureestern oder Dehydracetsäurederivaten sowie der Mercaptide auf der Basis von Mercaptocarbonsäureester und der Glycinate.

Zweckmässig sind Polymerzusammensetzungen, wie oben beschrieben, enthaltend als c) mindestens eine Verbindung aus der Reihe der Hydrotalcite der allgemeinen Formel I,

$$M^{2+}_{1-x}\cdot M^{3+}_{x}\cdot(OH)_2\cdot(A^{n-})_{x/n}\cdot mH_2O \qquad (I)$$

wobei

$M^{2+}$ = Mg, Ca, Sr, Ba, Zn, Cd, Pb, Sn und/oder Ni ist,
$M^{3+}$ = Al, B oder Bi ist,
$A^n$ ein Anion mit der Valenz n darstellt,
n eine Zahl von 1-4 ist,
x eine Zahl von 0-0,5 ist,
m eine Zahl von 0-2 ist und
A = $OH^-$, $Cl^-$, $Br^-$, $I^-$, $ClO_4^-$, $HCO_3^-$, $CH_3COO^-$, $C_6H_5COO^-$, $CO_3^{2-}$, $SO_4^{2-}$,

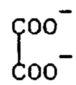,

$(CHOHCOO)_2^{2-}$, $(CHOH)_4CH_2OHCOO^-$, $C_2H_4(COO)_2^{2-}$, $(CH_2COO)_2^{2-}$, $CH_3CHOHCOO^-$, $SiO_3^{2-}$, $SiO_4^{4-}$, $Fe(CN)_6^{3-}$, $Fe(CN)_6^{4-}$ oder $HPO_4^{2-}$ darstellt.

Andere Hydrotalcite, die zweckmässig in Polymerzusammensetzungen, wie oben beschrieben, eingesetzt werden können, sind Verbindungen mit der allgemeinen Formel Ia,

$$M^{2+}_{x}Al_2(OH)_{2x+6nz}(A^{n-})_2\cdot mH_2O \qquad (Ia)$$

wobei in vorliegender Formel Ia $M^{2+}$ wenigstens ein Metall aus der Reihe von Mg und Zn darstellt und Mg bevorzugt ist, $A^{n-}$ ein Anion, beispielsweise aus der Reihe von $CO_3^{2-}$,

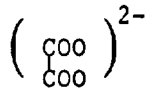,

$OH^-$ und $S^{2-}$
darstellt, wobei n die Valenz des Anions ist, m eine positive Zahl, vorzugsweise von 0,5 bis 5, darstellt und x und z positive Zahlen darstellen, wobei x vorzugsweise 2 bis 6 ist und z kleiner als 2 ist.

Zweckmässig sind Polymerzusammensetzungen, wie oben beschrieben, enthaltend als d) mindestens ein 1,3-Diketon der allgemeinen Formel II oder IIa,

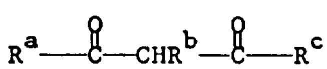 (II),

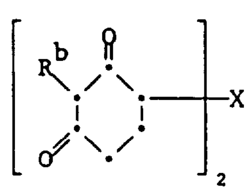 (IIa)

wobei

$R^a$ Alkyl mit 1 bis 22 C-Atomen, $C_5$-$C_{10}$-Hydroxyalkyl, Alkenyl mit 2 bis 22 C-Atomen, Phenyl, mit 1 bis 3 Gruppen der Reihe -OH, $C_1$-$C_4$-Alkyl, $C_1$- bis $C_4$-Alkoxy oder Halogen substituiertes Phenyl, Phenyl-$C_1$-$C_4$-alkyl, eine Grup-

pe der Formel

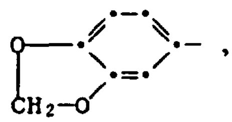

Cycloalkyl mit 5 bis 12 Ring-C-Atomen,
oder mit 1 bis 3 $C_1$-$C_4$-Alkylgruppen substituiertes Cycloalkyl mit 5 bis 12 Ring-C-Atomen bedeutet,

$R^c$ Alkyl mit 1 bis 22 C-Atomen, $C_5$-$C_{10}$-Hydroxyalkyl, Alkenyl mit 2 bis 22 C-Atomen, Phenyl, mit 1 bis 3 Gruppen der Reihe -OH, $C_1$-$C_4$-Alkyl, $C_1$- bis $C_4$-Alkoxy oder Halogen substituiertes Phenyl oder Phenyl-$C_1$-$C_4$-alkyl, eine Gruppe der Formel

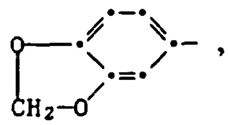

Cycloalkyl mit 5 bis 12 Ring-C-Atomen,
oder mit 1 bis 3 $C_1$ bis $C_4$-Alkylgruppen substituiertes Cycloalkyl mit 5 bis 12 Ring-C-Atomen bedeutet,

$R^b$ -H, Alkyl mit 1 bis 18 C-Atomen, Alkenyl mit 2 bis 12 C-Atomen, Phenyl, $C_1$-$C_4$-Alkyl substituiertes Phenyl, Phenyl-$C_1$-$C_4$-alkyl, oder eine Gruppe der Formel

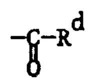

bedeutet,
wobei $R^d$ $-CH_3$, $-C_2H_5$ oder Phenyl darstellt, oder worin

$R^a$ und $R^b$ zusammen die Bedeutung eines Tetramethylenrestes oder eines Tetramethylenrestes, der mit einem Benzorest anelliert ist, aufweisen oder
$R^a$ und $R^c$ zusammen die Bedeutung eines Trimethylenrestes oder eines mit 1 bis 3 $C_1$-$C_4$-Alkylgruppen substituierten Trimethylenrestes aufweisen, und X Alkylen mit 1-4 C-Atomen bedeutet.
$R^a$ und $R^c$ als Alkyl mit 1 bis 22 C-Atomen kann beispielsweise Methyl, Ethyl, Propyl, n-Butyl, tert.-Butyl, Pentyl, Hexyl, 2-Ethylhexyl, Nonyl, Decyl, Undecyl, Dodecyl, Tridecyl, Octadecyl oder Eicosyl sein, $R^b$ als Alkyl mit 1 bis 18 C-Atomen kann beispielsweise obige Bedeutung ohne Eicosyl haben.

Beispiele von $C_5$-$C_{10}$-Hydroxyalkyl für $R^a$ und $R^c$ sind 5-Hydroxypentyl, 6-Hydroxyethyl oder 7-Hydroxyheptyl.

Beispiele für $R^a$ und $R^c$ als Alkenyl mit 2 bis 22 C-Atomen sind Vinyl, Propenyl, Allyl, Butenyl, Methallyl, Hexenyl, Decenyl oder Heptadecenyl. Entsprechende Beispiele für $R^b$ als Alkenyl mit 2 bis 12 C-Atomen lassen sich sinngemäss obiger Aufzählung entnehmen.

Bei den Phenylgruppen, die mit vorzugsweise ein bis drei Gruppen aus der Reihe -OH, $C_1$-$C_4$-Alkyl, $C_1$-$C_4$-Alkoxy oder Halogen substituiert sind, wie für $R^a$ und $R^c$ erwähnt, kann es sich um 4-Hydroxyphenyl-, um 4-Hydroxy-3,5-di-$C_1$-$C_4$-alkylphenyl, wobei $C_1$-$C_4$-Alkyl beispielsweise Methyl oder t-Butyl ist, um Methylphenyl, Dimethylphenyl, Ethylphenyl, n-Butylphenyl, tert.-Butylphenyl, Methyl-tert.-butylphenyl, di-tert.-Butylphenyl, um Methoxy oder Ethoxyphenyl oder um Monochlorphenyl handeln.

Bedeutet $R^b$ $C_1$-$C_4$-Alkyl substituiertes Phenyl so sind damit z.B. Methylphenyl, Ethylphenyl oder tert.-Butylphenyl umfasst.

Die Bedeutung von Phenyl-$C_1$-$C_4$-alkyl für $R^a$, $R^b$ und $R^c$ ist beispielsweise Benzyl oder Methylbenzyl.

$R^a$ und $R^c$ können auch Cycloalkyl mit 5 bis 12 Ring-C-Atomen oder mit 1 bis 3 $C_1$-$C_4$-Alkylgruppen substituietes Cycloalkyl mit 5 bis 12 Ring-C-Atomen bedeuten. Beispiele dafür sind Cyclopentyl, Cyclohexyl, Cycloheptyl, Cyclobutyl, Cyclononyl, Cyclododecyl usw., sowie Methylcyclohexyl, Dimethylcyclohexyl, Trimethylcyclohexyl, tert.-Butylcyclohexyl.

Beispiele für 1,3-Diketone sind:
Dehydroacetsäure, Dehydropropionylacetsäure, Dehydrobenzoylacetsäure, Cyclohexan-1,3-dion, Dimedon, 2,2'-Methylenebiscyclohexan-1,3-dion, 2-Benzylcyclohexan-1,3-dion, Acetyltetralon, Palmitoyltetralon, Stearoyltetralon, Benzoyltetralon, 2-Acetylcyclohexanon, 2-Benzoylcyclohexanon, 2-Acetyl-cyclohexane-1,3-dion, Benzoyl-p-chlorobenzoylmethan, Bis-(4-methylbenzoyl)methan, Bis-(2-hydroxybenzoyl)methan, Benzoylaceton, Tribenzoylmethan, Diacetylbenzoylmethan, Stearoylbenzoylmethan, Palmitoylbenzoylmethan, Lauroylbenzoylmethan, Dibenzoylmethan, 4-Methoxybenzoylbenzoylmethan, Bis-(4-methoxybenzoyl)methan, Bis-(4-chlorobenzoyl)methan, Bis-(3,4-methylenedioxybenzoyl)methan, Benzoylacetyloctylmethan, Benzoylacetylphenylmethan, Stearoyl-4-methoxy-benzoylmethan, Bis-(4-t-butylbenzoyl)methan, Butanoylaceton, Heptanoylaceton, Distearoylmethan, Acetylaceton, Stearoylaceton, Palmitoylaceton, Lauroylaceton, Benzoylformylmethan, Benzoylphenylacetylmethan, Bis-(cyclohexanoyl)methan oder Di-pivaloylmethan.

Als Costabilisatoren verwendbare 1,3-Diketoverbindungen sind insbesondere jene, die in der DE-B 2 600 516 und der EP-A 35 268 beschrieben sind, z.B. solche der im Patentanspruch der DE-B 2 600 516 angegebenen Formel. Bevorzugte 1,3-Diketoverbindungen sind Benzoylstearoyl-methan, 2-Benzoylacetessigsäurealkyl(z.B. ethyl)-ester und Triacylmethane.

Besonders bevorzugt sind 1,3-Diketone der Formel IIb,

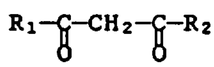 (IIb)

worin $R_1$ $C_1$-$C_{10}$-Alkyl, $C_5$-$C_{10}$-Hydroxyalkyl, Phenyl, Hydroxyphenyl, $C_7$-$C_{10}$-Phenylalkyl oder am Phenylring durch eine OH-Gruppe substituiertes $C_7$-$C_{10}$-Phenylalkyl ist und $R_2$ $C_5$-$C_{10}$-Hydroxyalkyl, Hydroxyphenyl oder am Phenylring durch eine OH-Gruppe substituiertes $C_7$-$C_{10}$-Phenylalkyl darstellt, mit der Bedingung, dass $R_2$ verschieden von Hydroxyphenyl ist, wenn $R_1$ Phenyl oder Hydroxyphenyl bedeutet.

$R_1$ bedeutet als $C_1$-$C_{10}$-Alkyl zum Beispiel Methyl, Ethyl, n-Propyl, Isopropyl, n-Butyl, tert-Butyl, n-Pentyl, n-Hexyl, n-Heptyl, n-Octyl oder n-Decyl. $C_1$-$C_4$-Alkyl, insbesondere Methyl und tert-Butyl, ist bevorzugt.

Beispiele für $R_1$ und $R_2$ als $C_5$-$C_{10}$-Hydroxyalkyl sind 5-Hydroxypentyl, 1,1-Dimethyl-3-hydroxypropyl, 6-Hydroxyhexyl, 8-Hydroxyoctyl und 10-Hydroxydecyl. 5-Hydroxypentyl, 6-Hydroxyhexyl und 7-Hydroxyheptyl sind bevorzugt. Vorzugsweise befindet sich die Hydroxyalkylgruppe nicht in $\alpha$-Stellung. $R_2$ bedeutet insbesondere eine Gruppe der Formel $-(CH_2)_n$-OH, worin n eine ganze Zahl von 5 bis 7 darstellt. Von besonderem Interesse ist $R_2$ als 5-Hydroxypentyl.

Bedeuten $R_1$ und $R_2$ Hydroxyphenyl, so kann sich die OH-Gruppe in ortho-, meta- oder para-Stellung befinden. o-Hydroxyphenyl ist bevorzugt.

Beispiele für $R_1$ als $C_7$-$C_{10}$-Phenylalkyl sind Benzyl und 2-Phenylethyl.

$R_1$ und $R_2$ bedeuten als $C_7$-$C_{10}$-Phenylalkyl, welches am Phenylring durch eine OH-Gruppe substituiert ist, z.B. (2-Hydroxyphenyl)methyl, (3-Hydroxyphenyl)methyl, (4-Hydroxyphenyl)methyl, 2-(2-Hydroxyphenyl)ethyl und 2-(4-Hydroxyphenyl)ethyl.

Innerhalb dieser Stabilisatorgruppe sind Verbindungen bevorzugt mit der obigen Formel IIb, worin $R_1$ $C_1$-$C_{10}$-Alkyl, $C_5$-$C_{10}$-Hydroxyalkyl, Phenyl, Hydroxyphenyl, $C_7$-$C_{10}$-Phenylalkyl oder am Phenylring durch eine OH-Gruppe substituiertes $C_7$-$C_{10}$-Phenylalkyl ist und $R_2$ $C_5$-$C_{10}$-Hydroxyalkyl, Hydroxyphenyl oder am Phenylring durch eine OH-Gruppe substituiertes $C_7$-$C_{10}$-Phenylalkyl darstellt, mit der Bedingung, dass $R_2$ verschieden von Hydroxyphenyl ist, wenn $R_1$ Phenyl oder Hydroxyphenyl bedeutet.

Besonders bevorzugt sind Verbindungen obiger Formel IIb worin $R_1$ $C_1$-$C_{10}$-Alkyl, $C_5$-$C_{10}$-Hydroxyalkyl oder Phenyl bedeutet und $R_2$ $C_5$-$C_{10}$-Hydroxyalkyl oder Hydroxyphenyl ist, oder ganz besonders bevorzugt worin $R_1$ $C_1$-$C_4$-Alkyl oder Phenyl bedeutet und $R_2$ $C_5$-$C_7$-Hydroxyalkyl oder Hydroxyphenyl ist, ferner worin $R_2$ eine Gruppe $-(CH_2)_n$-OH bedeutet, wobei n eine ganze Zahl von 5 bis 7 darstellt.

Weitere Beispiele besonders bevorzugter Verbindungen obiger Formel IIb sind solche, worin $R_1$ Methyl, Butyl oder Phenyl ist und $R_2$ 5-Hydroxypentyl, 6-Hydroxyhexyl, 7-Hydroxyheptyl oder ortho-Hydroxyphenyl darstellt.

Namentlich zu erwähnen sind die bevorzugten Verbindungen der Formel IIb

Stearoylbenzoylmethan,
Dibenzoylmethan,
1-Phenyl-8-hydroxyoctan-1,3-dion,
1-t-Butyl-8-hydroxyoctan-1,3-dion,
1-Methyl-8-hydroxyoctan-1,3-dion
oder
1-(o-Hydroxyphenyl)butan-1,3-dion.

Besonders bevorzugt sind auch 1,3-Diketoverbindungen der Formel IIc,

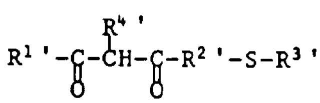 (IIc)

worin $R^{1'}$ und $R^{3'}$ unabhängig voneinander $C_1$-$C_{12}$-Alkyl, Phenyl, durch ein bis drei $C_1$-$C_{12}$-Alkylgruppen substituiertes Phenyl, $C_7$-$C_{10}$-Phenylalkyl oder durch ein bis drei $C_1$-$C_{12}$-Alkylgruppen substituiertes $C_7$-$C_{10}$-Phenylalkyl und $R^{1'}$ zusätzlich $-R^{2'}$-S-$R^{3'}$ bedeutet, $R^{2'}$ $C_1$-$C_{10}$-Alkylen darstellt und $R^{4'}$ Wasserstoff, $C_2$-$C_5$-Alkoxycarbonyl oder $C_2$-$C_5$-Alkanoyl ist. Weitere Ausführungen dazu, Beispiele und Bevorzugungen sind der EP 307 358 zu entnehmen.

Zweckmässig sind Polymerzusammensetzungen, wie oben beschrieben, enthaltend als e) mindestens eine Ca-Seife der allgemeinen Formel $Ca(OOCR^x)_2$, wobei $R^x$ eine Alkylgruppe mit 1 bis 22 C-Atomen, eine Alkenylgruppe mit 2 bis 22 C-Atomen, Phenyl, Phenyl-$C_1$-$C_4$-alkyl oder $C_1$-$C_8$-Alkylphenyl darstellt.

Bedeutet $R^x$ beispielsweise eine Alkylgruppe mit 1 bis 22 C-Atomen, so sind Beispiele dafür Methyl, Ethyl, Propyl, Isopropyl, n-Butyl, i-Butyl, tert.-Butyl, Pentyl, Hexyl, Heptyl, Octyl, 2-Ethylhexyl, Nonyl, Decyl, Undecyl, Dodecyl, Tridecyl, Tetradecyl, Pentadecyl, Hexadecyl, Heptadecyl, Octadecyl, 2-Ethylbutyl, 1-Methylpentyl, 1,3-Dimethylbutyl, 1,1,3,3-Tetramethylbutyl, 1-Methylhexyl, Isoheptyl, 1-Methylheptyl, 1,1,3-Trimethylhexyl, 1,1,3,3-Tetramethylhexyl, 1-Methylundecyl, 3,5,5-Trimethylhexyl, Eicosyl, Henicosyl und Docosyl.

Die Bedeutung von $R^x$ als Alkenyl mit 2 bis 22 C-Atomen kann beispielsweise Allyl, 2-Methallyl, 2-Butenyl, trans-2-Butenyl, 2-Hexenyl, trans-2,4-Hexadienyl, Decenyl, Undecenyl, Heptadecenyl, Oleyl, cis-9-Octadecenyl, trans-9-Octadecenyl, cis,cis-9,12-Octadecadienyl oder cis,cis,cis-9,12,15-Octadecatrienyl sein.

Bedeutet $R^x$ Phenyl-$C_1$-$C_4$-alkyl, so sind Beispiele dafür Benzyl oder Methylbenzyl. Ist die Bedeutung von $R^x$ $C_1$-$C_8$-Alkylphenyl, so sind Beispiele dafür Methylphenyl, Ethylphenyl, Propylphenyl, n-Butylphenyl, tert.-Butylphenyl, Octylphenyl, Dimethylphenyl, Methyl-tert.-butylphenyl und Di-tert.-butylphenyl.

Besonders zweckmässig sind Polymerzusammensetzungen, wie oben beschrieben, enthaltend als Derivat von Polyalkylpiperidinen ein Derivat des 2,2,6,6-Tetramethylpiperidins.

Von Bedeutung sind insbesondere die folgenden Klassen von Polyalkylpiperidinen, die mindestens eine Gruppe der Formel III, wie oben angegeben, tragen:

(a) Verbindungen der Formel IV

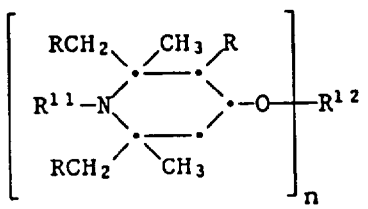

(IV),

worin n eine Zahl von 1 bis 4, vorzugsweise 1 oder 2 bedeutet, R Wasserstoff oder Methyl bedeutet, $R^{11}$ Wasserstoff, Oxyl, Hydroxyl, $C_1$-$C_{12}$-Alkyl, $C_3$-$C_8$-Alkenyl, $C_3$-$C_8$-Alkinyl, $C_7$-$C_{12}$-Aralkyl, $C_1$-$C_{18}$-Alkoxy, $C_5$-$C_8$-cycloalkoxy, $C_7$-$C_9$-Phenylalkoxy, $C_1$-$C_8$-Alkanoyl, $C_3$-$C_5$-Alkenoyl, $C_1$-$C_{18}$-Alkanoyloxy, Benzyloxy, Glycidyl oder eine Gruppe $-CH_2CH(OH)-Z$, worin Z Wasserstoff, Methyl oder Phenyl ist, bedeutet, wobei $R^{11}$ vorzugsweise H, $C_1$-$C_4$-Alkyl, Allyl, Benzyl, Acetyl oder Acryloyl ist und $R^{12}$, wenn n 1 ist, Wasserstoff, gegebenenfalls durch ein oder mehrere Sauerstoffatome unterbrochenes $C_1$-$C_{18}$-Alkyl, Cyanethyl, Benzyl, Glycidyl, einen einwertigen Rest einer aliphatischen, cycloaliphatischen, araliphatischen, ungesättigten oder aromatischen Carbonsäure, Carbaminsäure oder Phosphor enthaltenden Säure oder einen einwertigen Silylrest, vorzugsweise einen Rest einer aliphatischen Carbonsäure mit 2 bis 18 C-Atomen, einer cycloaliphatischen Carbonsäure mit 7 bis 15 C-Atomen, einer $\alpha,\beta$-ungesättigten Carbonsäure mit 3 bis 5 C-Atomen oder einer aromatischen Carbonsäure mit 7 bis 15 C-Atomen bedeutet, wenn n 2 ist, $C_1$-$C_{12}$-Alkylen, $C_4$-$C_{12}$-Alkenylen, Xylylen, einen zweiwertigen Rest einer aliphatischen, cycloaliphatischen, araliphatischen oder aromatischen Dicarbonsäure, Dicarbaminsäure oder Phosphor enthaltenden Säure oder einen zweiwertigen Silylrest, vorzugsweise einen Rest einer aliphatischen Dicarbonsäure mit 2 bis 36 C-Atomen, einer cycloaliphatischen oder aromatischen Dicarbonsäure mit 8 - 14 C-Atomen oder einer aliphatischen, cycloaliphatischen oder aromatischen Dicarbaminsäure mit 8 - 14 C-Atomen bedeutet, wenn n 3 ist, einen dreiwertigen Rest einer aliphatischen, cycloaliphatischen oder aromatischen Tricarbonsäure, einer aromatischen Tricarbaminsäure oder einer Phosphor enthaltenden Säure oder einen dreiwertigen Silylrest bedeutet und wenn n 4 ist, einen vierwertigen Rest einer aliphatischen, cycloaliphatischen oder aromatischen Tetracarbonsäure bedeutet, wobei

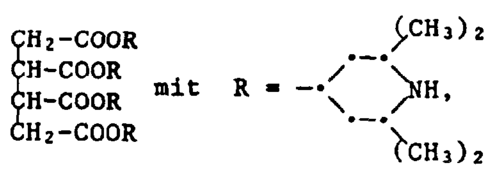

ausgeschlossen ist.

Von Interesse sind Verbindungen der Formel IV, mit der Massgabe, dass, wenn n = 2 ist, für $R^{12}$ Reste von aliphatischen Dicarbonsäuren der Formel $-OOC-(CH_2)_8-COO-$ ausgeschlossen sind. Von Interesse sind auch Verbindungen der Formel IV, mit der Massgabe, dass, wenn n = 2 ist, für $R^{12}$, Reste von aliphatischen Dicarbonsäuren mit 8 bis 12 C-Atomen ausgeschlossen sind.

Bedeuten etwaige Substituenten $C_1$-$C_{12}$-Alkyl, so stellen sie z.B. Methyl, Ethyl, n-Propyl, n-Butyl, sek.-Butyl, tert.-

Butyl, n-Hexyl, n-Octyl, 2-Ethyl-hexyl, n-Nonyl, n-Decyl, n-Undecyl oder n-Dodecyl dar.

In der Bedeutung von $C_1$-$C_{18}$-Alkyl kann $R^{11}$ oder $R^{12}$ z.B. die oben angeführten Gruppen und dazu noch beispielsweise n-Tridecyl, n-Tetradecyl, n-Hexadecyl oder n-Octadecyl darstellen.

Wenn $R^{11}$ $C_3$-$C_8$-Alkenyl bedeutet, so kann es sich z.B. um 1-Propenyl, Allyl, Methallyl, 2-Butenyl, 2-Pentenyl, 2-Hexenyl, 2-Octenyl, 4-tert.-Butyl-2-butenyl handeln.

$R^{11}$ ist als $C_3$-$C_8$-Alkinyl bevorzugt Propargyl.

Als $C_7$-$C_{12}$-Aralkyl ist $R^{11}$ insbesondere Phenethyl und vor allem Benzyl.

$R^{11}$ ist als $C_1$-$C_8$-Alkanoyl beispielsweise Formyl, Propionyl, Butyryl, Octanoyl, aber bevorzugt Acetyl und als $C_3$-$C_5$-Alkenoyl insbesondere Acryloyl.

Bedeutet $R^{12}$ einen einwertigen Rest einer Carbonsäure, so stellt es beispielsweise einen Essigsäure-, Capronsäure-, Stearinsäure-, Acrylsäure-, Methacrylsäure-, Benzoe- oder β-(3,5-Di-tert.-butyl-4-hydroxyphenyl)-propionsäurerest dar.

Bedeutet $R^{12}$ einen zweiwertigen Rest einer Dicarbonsäure, so stellt es beispielsweise einen Malonsäure-, Bernsteinsäure-, Glutarsäure-, Adipinsäure-, Korksäure-, Sebacinsäure-, Maleinsäure-, Itaconsäure-, Phthalsäure-, Dibutylmalonsäure-, Dibenzylmalonsäure-, Butyl-(3,5-di-tert.-butyl-4-hydroxybenzyl)-malonsäure- oder Bicycloheptendicarbonsäurerest dar.

Stellt $R^{12}$ einen dreiwertigen Rest einer Tricarbonsäure dar, so bedeutet es z.B. einen Trimellitsäure-, Citronensäure- oder Nitrilotriessigsäurerest.

Stellt $R^{12}$ einen vierwertigen Rest einer Tetracarbonsäure dar, so bedeutet es z.B. den vierwertigen Rest von Butan-1,2,3,4-tetracarbonsäure oder von Pyromellitsäure.

Bedeutet $R^{12}$ einen zweiwertigen Rest einer Dicarbaminsäure, so stellt es beispielsweise einen Hexamethylendicarbaminsäure- oder einen 2,4-Toluylen-dicarbaminsäurerest dar.

Bevorzugt sind Verbindungen der Formel IV, worin R Wasserstoff ist, $R^{11}$ Wasserstoff oder Methyl ist, n 2 ist und $R^{12}$ der Diacylrest einer aliphatischen Dicarbonsäure mit 4-12 C-Atomen ist.

Beispiele für Polyalkylpiperidin-Verbindungen dieser Klasse sind folgende Verbindungen:

1) 4-Hydroxy-2,2,6,6-tetramethylpiperidin
2) 1-Allyl-4-hydroxy-2,2,6,6-tetramethylpiperidin
3) 1-Benzyl-4-hydroxy-2,2,6,6-tetramethylpiperidin
4) 1-(4-tert.-Butyl-2-butenyl)-4-hydroxy-2,2,6,6-tetramethylpiperidin
5) 4-Stearoyloxy-2,2,6,6-tetramethylpiperidin
6) 1-Ethyl-4-salicyloyloxy-2,2,6,6-tetramethylpiperidin
7) 4-Methacryloyloxy-1,2,2,6,6-pentamethylpiperidin
8) 1,2,2,6,6-Pentamethylpiperidin-4-yl-β-(3,5-di-tert.-butyl-4-hydroxyphenyl)-propionat
9) Di-(1-benzyl-2,2,6,6-tetramethylpiperidin-4-yl)-maleinat
10) Di-(2,2,6,6-tetramethylpiperidin-4-yl)-succinat
11) Di-(2,2,6,6-tetramethylpiperidin-4-yl)-glutarat
12) Di-(2,2,6,6-tetramethylpiperidin-4-yl)-adipat
13) Di-(2,2,6,6-tetramethylpiperidin-4-yl)-sebacat
14) Di-(1,2,2,6,6-pentamethylpiperidin-4-yl)-sebacat
15) Di-(1,2,3,6-tetramethyl-2,6-diethyl-piperidin-4-yl)-sebacat
16) Di-(1-allyl-2,2,6,6-tetramethylpiperidin-4-yl)-phthalat
17) 1-Hydroxy-4-β-cyanoethyloxy-2,2,6,6-tetramethylpiperidin
18) 1-Acetyl-2,2,6,6-tetramethylpiperidin-4-yl-acetat
19) Trimellithsäure-tri-(2,2,6,6-tetramethylpiperidin-4-yl)-ester
20) 1-Acryloyl-4-benzyloxy-2,2,6,6-tetramethylpiperidin
21) Diethylmalonsäure-di(2,2,6,6-tetramethylpiperidin-4-yl)-ester
22) Dibutyl-malonsäure-di-(1,2,2,6,6-pentamethylpiperidin-4-yl)-ester
23) Butyl-(3,5-di-tert.-butyl-4-hydroxybenzyl)-malonsäure-di-(1,2,2,6,6-pentamethylpiperidin-4-yl)-ester
24) Di-(1-octyloxy-2,2,6,6-tetramethylpiperidin-4-yl)-sebacat
25) Di-(1-cyclohexyloxy-2,2,6,6-tetramethylpiperidin-4-yl)-sebacat
26) Hexan-1′,6′-bis-(4-carbamoyloxy-1-n-butyl-2,2,6,6-tetramethylpiperidin)
27) Toluol-2′,4′-bis-(4-carbamoyloxy-1-n-propyl-2,2,6,6-tetramethylpiperidin)
28) Dimethyl-bis-(2,2,6,6-tetramethylpiperidin-4-oxy)-silan
29) Phenyl-tris-(2,2,6,6-tetramethylpiperidin-4-oxy)-silan
30) Tris-(1-propyl-2,2,6,6-tetramethylpiperidin-4-yl)-phosphit
31) Tris-(1-propyl-2,2,6,6-tetramethylpiperidin-4-yl)phosphat
32) Phenyl-[bis-(1,2,2,6,6-pentamethylpiperidin-4-yl)]-phosphonat

33) 4-Hydroxy-1,2,2,6,6-pentamethylpiperidin
34) 4-Hydroxy-N-hydroxyethyl-2,2,6,6-tetramethylpiperidin
35) 4-Hydroxy-N-(2-hydroxypropyl)-2,2,6,6-tetramethylpiperidin
36) 1-Glycidyl-4-hydroxy-2,2,6,6-tetramethylpiperidin

(b) Verbindungen der Formel (V)

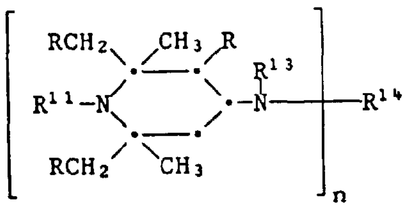

(V)

worin n die Zahl 1 oder 2 bedeutet, R und $R^{11}$ die unter (a) angegebene Bedeutung haben, $R^{13}$ Wasserstoff, $C_1$-$C_{12}$-Alkyl, $C_2$-$C_5$-Hydroxyalkyl, $C_5$-$C_7$-Cycloalkyl, $C_7$-$C_8$-Aralkyl, $C_2$-$C_{18}$-Alkanoyl, $C_3$-$C_5$-Alkenoyl, Benzoyl oder eine Gruppe der Formel

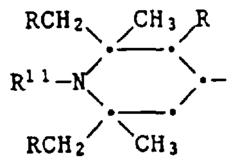

ist und $R^{14}$ wenn n 1 ist, Wasserstoff, $C_1$-$C_{18}$-Alkyl, $C_3$-$C_8$-Alkenyl, $C_5$-$C_7$-Cycloalkyl, mit einer Hydroxy-, Cyano-, Alkoxycarbonyl- oder Carbamidgruppe substituiertes $C_1$-$C_4$-Alkyl, Glycidyl, eine Gruppe der Formel $-CH_2-CH(OH)-Z$ oder der Formel -CONH-Z ist, worin Z Wasserstoff, Methyl oder Phenyl bedeutet; wenn n 2 ist, $C_2$-$C_{12}$-Alkylen, $C_6$-$C_{12}$-Arylen, Xylylen, eine $-CH_2-CH(OH)-CH_2$-Gruppe oder eine Gruppe $-CH_2-CH(OH)-CH_2-O-D-O-$ bedeutet, worin D $C_2$-$C_{10}$-Alkylen, $C_6$-$C_{15}$-Arylen, $C_6$-$C_{12}$-Cycloalkylen ist, oder vorausgesetzt, dass $R^{13}$ nicht Alkanoyl, Alkenoyl oder Benzoyl bedeutet, $R^{14}$ auch einen zweiwertigen Rest einer aliphatischen, cycloaliphatischen oder aromatischen Dicarbonsäure oder Dicarbaminsäure oder auch die Gruppe -CO- bedeuten kann, oder $R^{13}$ und $R^{14}$ zusammen, wenn n 1 ist, den zweiwertigen Rest einer aliphatischen, cycloaliphatischen oder aromatischen 1,2- oder 1,3-Dicarbonsäure bedeuten können.

Stellen etwaige Substituenten $C_1$-$C_{12}$- oder $C_1$-$C_{18}$-Alkyl dar, so haben sie die bereits unter (a) angegebene Bedeutung.

Bedeuten etwaige Substituenten $C_5$-$C_7$-Cycloalkyl, so stellen sie insbesondere Cyclohexyl dar.

Als $C_7$-$C_8$-Aralkyl ist $R^{13}$ insbesondere Phenylethyl oder vor allem Benzyl. Als $C_2$-$C_5$-Hydroxyalkyl ist $R^{13}$ insbesondere 2-Hydroxyethyl oder 2-Hydroxypropyl.

$R^{13}$ ist als $C_2$-$C_{18}$-Alkanoyl beispielsweise Propionyl, Butyryl, Octanoyl, Dodecanoyl, Hexadecanoyl, Octadecanoyl, aber bevorzugt Acetyl und als $C_3$-$C_5$-Alkenoyl insbesondere Acryloyl.

Bedeutet $R^{14}$ $C_2$-$C_8$-Alkenyl, dann handelt es sich z.B. um Allyl, Methallyl, 2-Butenyl, 2-Pentenyl, 2-Hexenyl oder 2-Octenyl.

$R^{14}$ als mit einer Hydroxy-, Cyano-, Alkoxycarbonyl- oder Carbamidgruppe substituiertes $C_1$-$C_4$-Alkyl kann z.B. 2-Hydroxyethyl, 2-Hydroxypropyl, 2-Cyanethyl, Methoxycarbonylmethyl, 2-Ethoxycarbonylethyl, 2-Aminocarbonylpropyl oder 2-(Dimethylaminocarbonyl)-ethyl sein.

Stellen etwaige Substituenten $C_2$-$C_{12}$-Alkylen dar, so handelt es sich z.B. um Ethylen, Propylen, 2,2-Dimethylpropylen, Tetramethylen, Hexamethylen, Octamethylen, Decamethylen oder Dodecamethylen.

Bedeuten etwaige Substituenten $C_6$-$C_{15}$-Arylen, so stellen sie z.B. o-, m- oder p-Phenylen, 1,4-Naphthylen oder 4,4'-Diphenylen dar.

Als $C_6$-$C_{12}$-Cycloalkylen ist insbesondere Cyclohexylen zu nennen.

Bevorzugt sind Verbindungen der Formel V, worin n 1 oder 2 ist, R Wasserstoff ist, $R^{11}$ Wasserstoff oder Methyl ist, $R^{13}$ Wasserstoff, $C_1$-$C_{12}$-Alkyl oder eine Gruppe der Formel

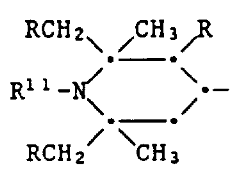

ist und $R^{14}$ im Fall von n=1 Wasserstoff oder $C_1$-$C_{12}$-Alkyl ist, und im Fall von n=2 $C_2$-$C_8$-Alkylen ist.

Beispiele für Polyalkylpiperidin-Verbindungen dieser Klasse sind folgende Verbindungen:

37) N,N'-Bis-(2,2,6,6-tetramethylpiperidin-4-yl)-hexamethylen-1,6-diamin

38) N,N'-Bis-(2,2,6,6-tetramethylpiperidin-4-yl)-hexamethylen-1,6-diacetamid

39) Bis-(2,2,6,6-tetramethylpiperidin-4-yl)-amin

40) 4-Benzoylamino-2,2,6,6-tetramethylpiperidin

41) N,N'-Bis-(2,2,6,6-tetramethylpiperidin-4-yl)-N,N'-dibutyl-adipamid

42) N,N'-Bis-(2,2,6,6-tetramethylpiperidin4-yl)-N,N'-dicyclohexyl-2-hydroxypropylen-1,3-diamin

43) N,N'-Bis-(2,2,6,6-tetramethylpiperidin-4-yl)-p-xylylen-diamin

44) N,N'-Bis-(2,2,6,6-tetramethylpiperidin-4-yl)-succindiamid

45) N-(2,2,6,6-Tetramethylpiperidin-4-yl)-β-aminodipropionsäure-di-(2,2,6,6-tetramethylpiperidin-4-yl)-ester

46) Die Verbindung der Formel

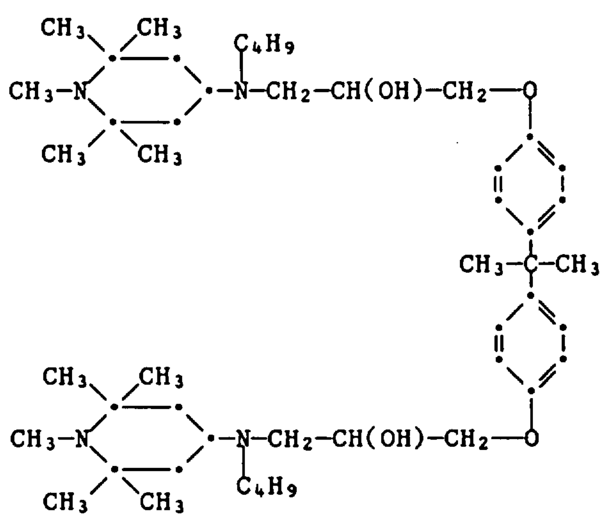

47) 4-(Bis-2-hydroxyethyl-amino)-1,2,2,6,6-pentamethylpiperidin

48) 4-(3-Methyl-4-hydroxy-5-tert.-butyl-benzoesäureamido)-2,2,6,6-tetramethylpiperidin

49) 4-Methacrylamido-1,2,2,6,6-pentamethylpiperidin

(c) Verbindungen der Formel (VI)

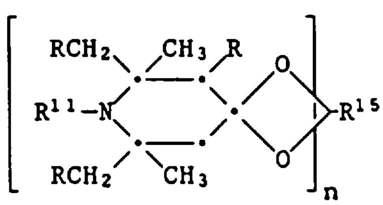

(VI)

worin n die Zahl 1 oder 2 bedeutet, R und $R^{11}$ die unter (a) angegebene Bedeutung haben und $R^{15}$, wenn n 1 ist, $C_2$-$C_8$-Alkylen oder -Hydroxyalkylen oder $C_4$-$C_{22}$-Acyloxyalkylen, wenn n 2 ist, die Gruppe $(-CH_2)_2C(CH_2-)_2$ bedeutet.

Bedeutet $R^{15}$ $C_2$-$C_8$-Alkylen oder -Hydroxyalkylen, so stellt es beispielsweise Ethylen, 1-Methyl-ethylen, Propylen, 2-Ethyl-propylen oder 2-Ethyl-2-hydroxymethylpropylen dar.

Als $C_4$-$C_{22}$-Acyloxyalkylen bedeutet $R^{15}$ z.B. 2-Ethyl-2-acetoxymethylpropylen.

Beispiele für Polyalkylpiperidin-Verbindungen dieser Klasse sind folgende Verbindungen:

50) 9-Aza-8,8,10,10-tetramethyl-1,5-dioxaspiro[5.5]undecan

51) 9-Aza-8,8,10,10-tetramethyl-3-ethyl-1,5-dioxaspiro[5.5]undecan

52) 8-Aza-2,7,7,8,9,9-hexamethyl-1,4-dioxaspiro[4.5]decan

53) 9-Aza-3-hydroxymethyl-3-ethyl-8,8,9,10,10-pentamethyl-1,5-dioxaspiro[5.5]undecan

54) 9-Aza-3-ethyl-3-acetoxymethyl-9-acetyl-8,8,10,10-tetramethyl-1,5-dioxaspiro[5.5]undecan

55) 2,2,6,6-Tetramethylpiperidin-4-spiro-2′-(1′,3′-dioxan)-5′-spiro-5″-(1″,3″-dioxan)-2″-spiro-4‴-(2‴,2‴,6‴,6‴-tetramethylpiperidin).

(d) Verbindungen der Formeln VIIA, VIIB und VIIC, wobei Verbindungen der Formeln VIIA bevorzugt sind,

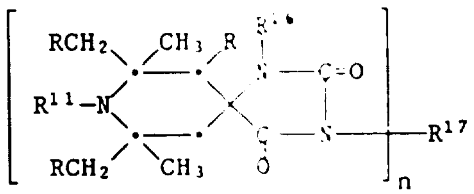

(VIIA)

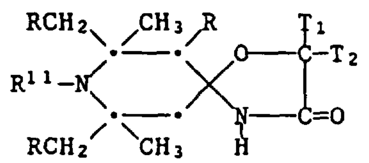

(VIIB)

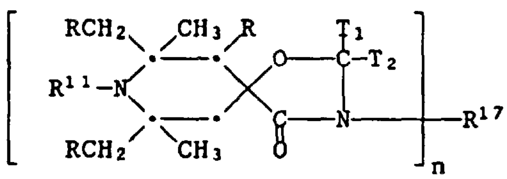

(VIIC)

worin n die Zahl 1 oder 2 bedeutet, R und $R^{11}$ die unter (a) angegebene Bedeutung haben, $R^{16}$ Wasserstoff, $C_1$-$C_{12}$-Alkyl, Allyl, Benzyl, Glycidyl oder $C_2$-$C_6$-Alkoxyalkyl ist und $R^{17}$, wenn n 1 ist, Wasserstoff, $C_1$-$C_{12}$-Alkyl, $C_3$-$C_5$-Alkenyl, $C_7$-$C_9$-Aralkyl, $C_5$-$C_7$ Cycloalkyl, $C_2$-$C_4$-Hydroxyalkyl, $C_2$-$C_6$-Alkoxyalkyl, $C_6$-$C_{10}$-Aryl, Glycidyl oder eine Gruppe der Formel $-(CH_2)_p$-COO-Q oder der Formel $-(CH_2)_p$-O-CO-Q ist, worin p 1 oder 2 und Q $C_1$-$C_4$ Alkyl oder Phenyl sind, wenn n 2 ist, $C_2$-$C_{12}$ Alkylen, $C_4$-$C_{12}$-Alkenylen, $C_6$-$C_{12}$ Arylen, eine Gruppe $-CH_2$-CH(OH)-$CH_2$-O-D-O-$CH_2$-CH(OH)-$CH_2$-, worin D $C_2$-$C_{10}$ Alkylen, $C_6$-$C_{15}$-Arylen, $C_6$-$C_{12}$ Cycloalkylen ist, oder eine Gruppe $-CH_2CH(OZ')CH_2-(OCH_2-CH(OZ')CH_2)_2-$ bedeutet, worin Z′ Wasserstoff, $C_1$-$C_{18}$-Alkyl, Allyl, Benzyl, $C_2$-$C_{12}$-Alkanoyl oder Benzoyl ist, $T_1$ und $T_2$ unabhängig voneinander Wasserstoff, $C_1$-$C_{18}$-Alkyl oder gegebenenfalls durch Halogen oder $C_1$-$C_4$-Alkyl substituiertes $C_6$-$C_{10}$-Aryl oder $C_7$-$C_9$-Aralkyl bedeuten oder $T_1$ und $T_2$ zusammen mit dem sie bindenden C-Atom einen $C_5$-$C_{12}$-Cycloalkanring bilden.

Bedeuten etwaige Substituenten $C_1$-$C_{12}$-Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.

Etwaige Substituenten in der Bedeutung von $C_1$-$C_{18}$-Alkyl können z.B. die oben angeführten Gruppen und dazu noch beispielsweise n-Tridecyl, n-Tetradecyl, n-Hexadecyl oder n-Octadecyl darstellen.

Bedeuten etwaige Substituenten $C_2$-$C_6$-Alkoxyalkyl, so stellen sie z.B. Methoxymethyl, Ethoxymethyl, Propoxymethyl, tert.-Butoxymethyl, Ethoxyethyl, Ethoxypropyl, n-Butoxyethyl, tert.-Butoxyethyl, Isopropoxyethyl oder Propoxy-

propyl dar.

Stellt $R^{17}$ $C_3$-$C_5$-Alkenyl dar, so bedeutet es z.B. 1-Propenyl, Allyl, Methallyl, 2-Butenyl oder 2-Pentenyl.

Als $C_7$-$C_9$-Aralkyl sind $R^{17}$, $T_1$ und $T_2$ insbesondere Phenethyl oder vor allem Benzyl. Bilden $T_1$ und $T_2$ zusammen mit dem C-Atom einen Cycloalkanring, so kann dies z.B. ein Cyclopentan-, Cyclohexan-, Cyclooctan-oder Cyclododecanring sein.

Bedeutet $R^{17}$ $C_2$-$C_4$-Hydroxyalkyl, so stellt es z.B. 2-Hydroxyethyl, 2-Hydroxypropyl, 2-Hydroxybutyl oder 4-Hydroxybutyl dar.

Als $C_6$-$C_{10}$-Aryl bedeuten $R^{17}$, $T_1$ und $T_2$ insbesondere Phenyl, α- oder β-Naphthyl, die gegebenenfalls mit Halogen oder $C_1$-$C_4$-Alkyl substituiert sind.

Stellt $R^{17}$ $C_2$-$C_{12}$-Alkylen dar, so handelt es sich z.B. um Ethylen, Propylen, 2,2-Dimethylpropylen, Tetramethylen, Hexamethylen, Octamethylen, Decamethylen oder Dodecamethylen.

Als $C_4$-$C_{12}$-Alkenylen bedeutet $R^{17}$ insbesondere 2-Butenylen, 2-Pentenylen oder 3-Hexenylen.

Bedeutet $R^{17}$ $C_6$-$C_{12}$ Arylen, so stellt es beispielsweise o-, m- oder p-Phenylen, 1,4-Naphthylen oder 4,4′-Diphenylen dar.

Bedeutet Z′ $C_2$-$C_{12}$ Alkanoyl, so stellt es beispielsweise Propionyl, Butyryl, Octanoyl, Dodecanoyl, aber bevorzugt Acetyl dar.

D hat als $C_2$-$C_{10}$ Alkylen, $C_6$-$C_{15}$ Arylen oder $C_6$-$C_{12}$ Cycloalkylen die unter (b) angegebene Bedeutung.

Beispiele für Polyalkylpiperidin-Verbindungen dieser Klasse sind folgende Verbindungen:

56) 3-Benzyl-1,3,8-triaza-7,7,9,9-tetramethylspiro[4.5]decan-2,4-dion

57) 3-n-Octyl-1,3,8-triaza-7,7,9,9-tetramethylspiro[4.5]decan-2,4-dion

58) 3-Allyl-1,3,8-triaza-1,7,7,9,9-pentamethylspiro[4.5]decan-2,4-dion

59) 3-Glycidyl-1,3,8-triaza-7,7,8,9,9-pentamethylspiro[4.5]decan-2,4-dion

60) 1,3,7,7,8,9,9-Heptamethyl-1,3,8-triazaspiro[4.5]decan-2,4-dion

61) 2-Iso-propyl-7,7,9,9-tetramethyl-1-oxa-3,8-diaza-4-oxo-spiro[4.5]decan

62) 2,2-Dibutyl-7,7,9,9-tetramethyl-1-oxa-3,8-diaza-4-oxo-spiro-[4.5]decan

63) 2,2,4,4-Tetramethyl-7-oxa-3,20-diaza-21-oxo-dispiro[5.1.11.2]heneicosan

64) 2-Butyl-7,7,9,9-tetramethyl-1-oxa-4,8-diaza-3-oxo-spiro-[4,5]decan
und bevorzugt:

65) 8-Acetyl-3-dodecyl-1,3,8-triaza-7,7,9,9-tetramethylspiro[4,5]-decan-2,4-dion
oder die Verbindungen der folgenden Formeln:

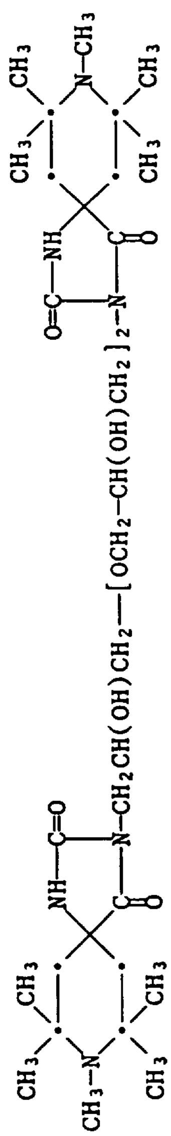

66)

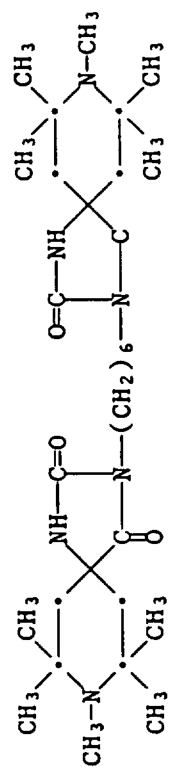

67)

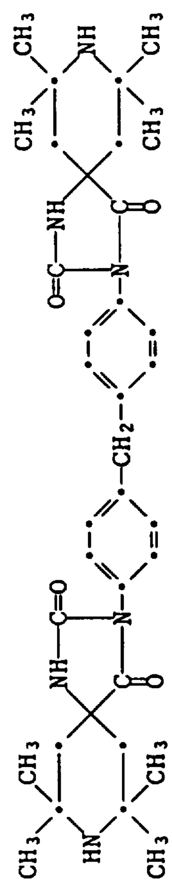

68)

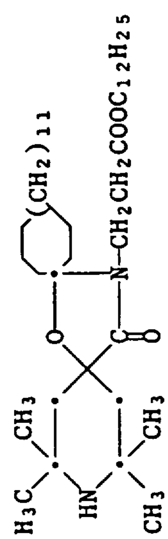

69)

(e) Verbindungen der Formel VIII, die ihrerseits bevorzugt sind,

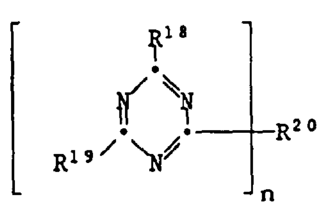

(VIII),

worin n die Zahl 1 oder 2 ist und $R^{18}$ eine Gruppe der Formel

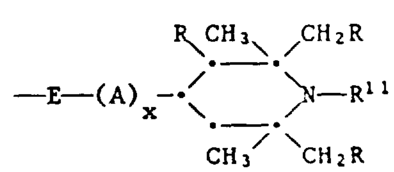

bedeutet, worin R und $R^{11}$ die unter (a) angegebene Bedeutung haben, E -O- oder $-NR^{11}-$ ist, A $C_2$-$C_6$-Alkylen oder -

$(CH_2)_3$-O- und x die Zahlen O oder 1 bedeuten, $R^{19}$ gleich $R^{18}$ oder eine der Gruppen $-NR^{21}R^{22}$, $-OR^{23}$, $-NHCH_2OR^{23}$ oder $-N(CH_2OR^{23})_2$ ist, $R^{20}$, wenn $n \neq 1$ ist, gleich $R^{18}$ oder $R^{19}$, und wenn $n = 2$ ist, eine Gruppe -E-B-E- ist, worin B gegebenenfalls durch $-N(R^{21})$- unterbrochenes C2-C6-Alkylen bedeutet, $R^{11}$ $C_1$-$C_{12}$-Alkyl, Cyclohexyl, Benzyl oder $C_1$-$C_4$-Hydroxyalkyl oder eine Gruppe der Formel

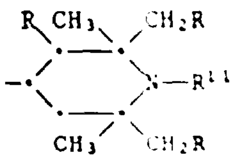

ist, $R^{22}$ $C_1$-$C_{12}$ Alkyl, Cyclohexyl, Benzyl, $C_1$-$C_4$ Hydroxyalkyl und $R^{23}$ Wasserstoff, $C_1$-$C_{12}$ Alkyl oder Phenyl bedeuten oder $R^{21}$ und $R^{22}$ zusammen $C_4$-$C_5$-Alkylen oder -Oxaalkylen, beispielsweise

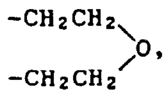 oder eine Gruppe der Formel 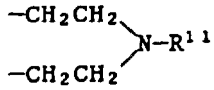

sind oder auch $R^{21}$ und $R^{22}$ jeweils eine Gruppe der Formel

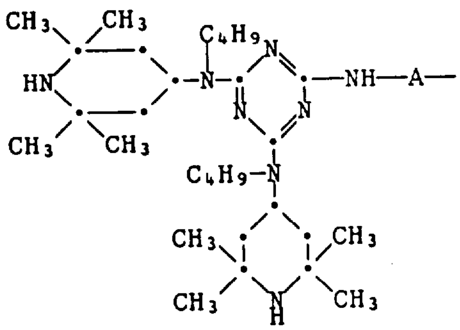

bedeuten.

Bedeuten etwaige Substituenten $C_1$-$C_{12}$-Alkyl, so stellen sie beispielsweise Methyl, Ethyl, n-Propyl, n-Butyl, sek.-Butyl, tert.-Butyl, n-Hexyl, n-Octyl, 2-Ethylhexyl, n-Nonyl, n-Decyl, n-Undecyl oder n-Dodecyl dar.

Bedeuten etwaige Substituenten $C_1$-$C_4$-Hydroxyalkyl, so stellen sie z.B. 2-Hydroxyethyl, 2-Hydroxypropyl, 3-Hydroxypropyl, 2-Hydroxybutyl oder 4-Hydroxybutyl dar.

Bedeutet A $C_2$-$C_6$ Alkylen, so stellt es beispielsweise Ethylen, Propylen, 2,2-Dimethylpropylen, Tetramethylen oder Hexamethylen dar.

Stellen $R^{21}$ und $R^{22}$ zusammen $C_4$-$C_5$-Alkylen oder Oxaalkylen dar, so bedeutet dies z.B. Tetramethylen, Pentamethylen oder 3-Oxapentamethylen.

Beispiele für Polyalkylpiperidin-Verbindungen dieser Klasse sind die Verbindungen der folgenden Formeln:

70) 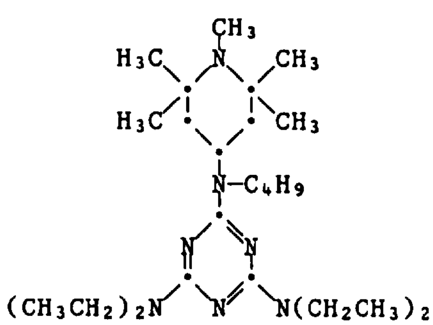

71) 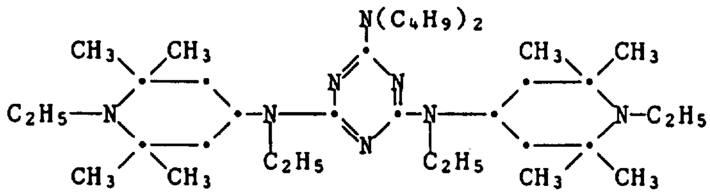

72) 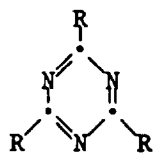 mit R = $-NH-CH_2CH_2CH_2-O-$ 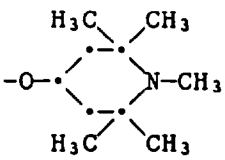

73)

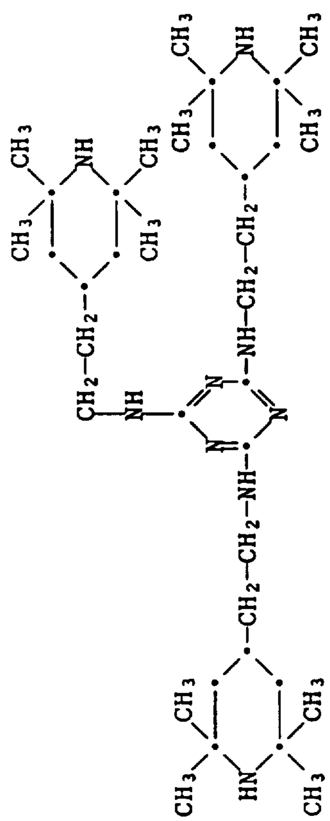

74)

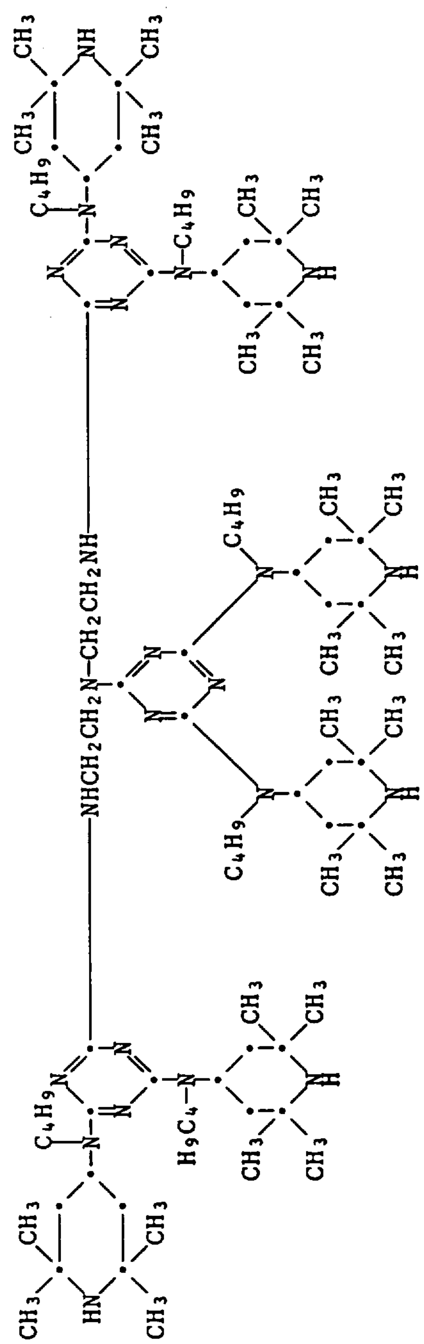

75) 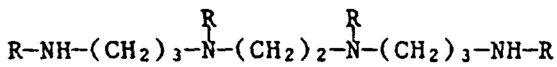

mit R = 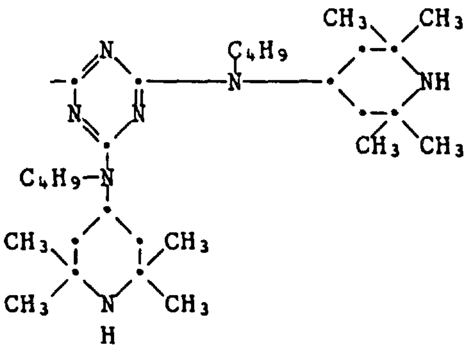

76) 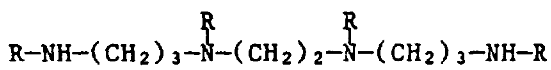

mit R = 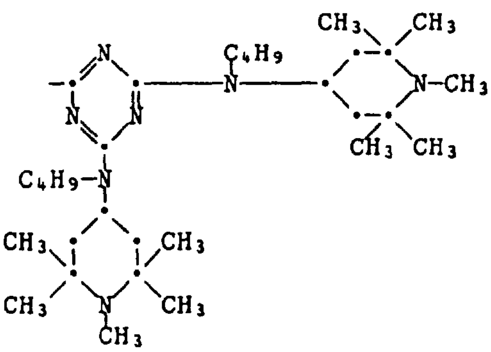

77) 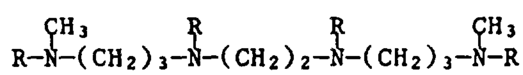

mit R = 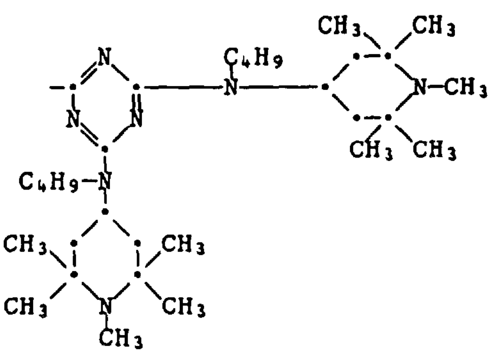

78) 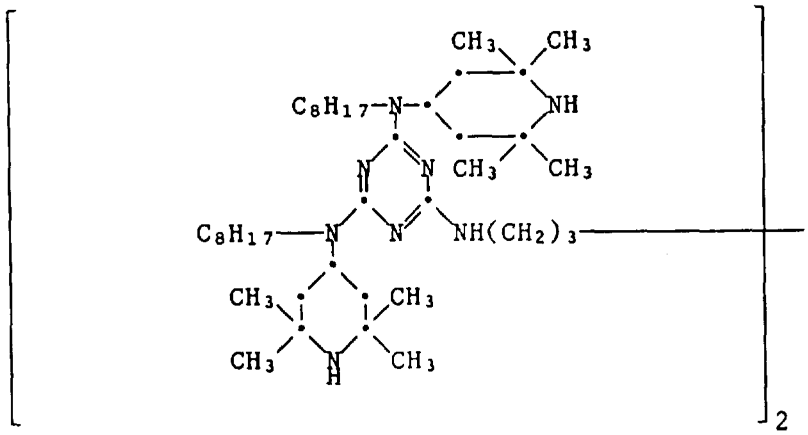

79) 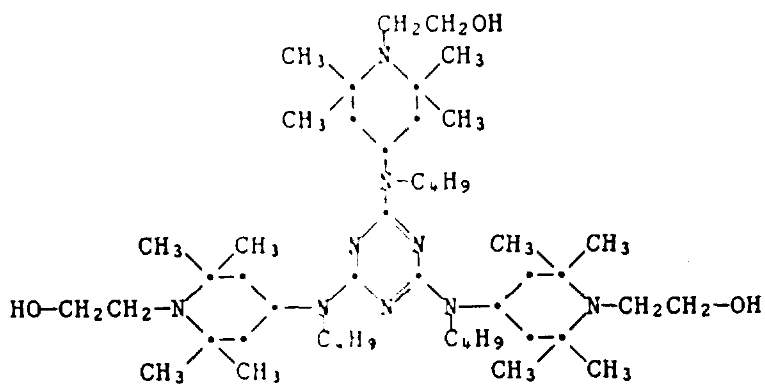

(80) 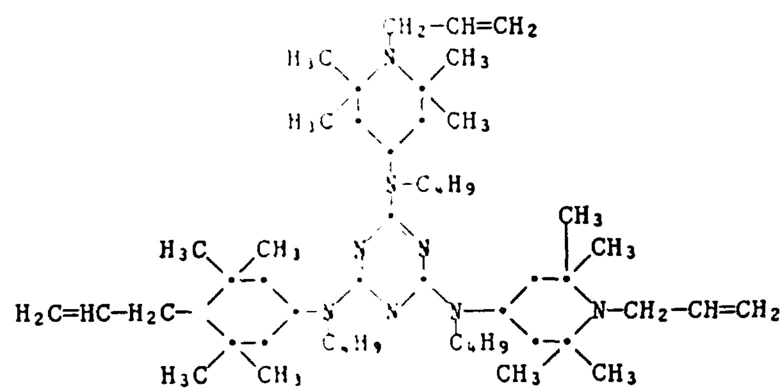

(f) Oligomere oder polymere Verbindungen, deren wiederkehrende Struktureinheit einen 2,2,6,6-Tetraalkylpiperidinrest der Formel III enthält, insbesondere Polyester, Polyäther, Polyamide, Polyamine, Polyurethane, Polyharnstoffe, Polyaminotriazine, Poly(meth)acrylate, Poly(meth)acrylamide und deren Copolymere, die solche Reste enthalten.

Beispiele für 2,2,6,6-Polyalkylpiperidin-Lichtschutzmittel dieser Klasse sind die Verbindungen der folgenden Formeln, wobei m eine Zahl von 2 bis etwa 200 bedeutet.

81)

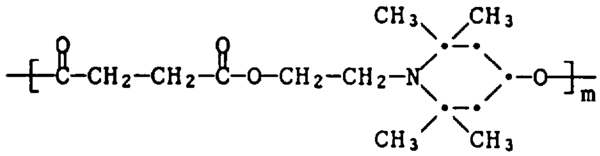

82)

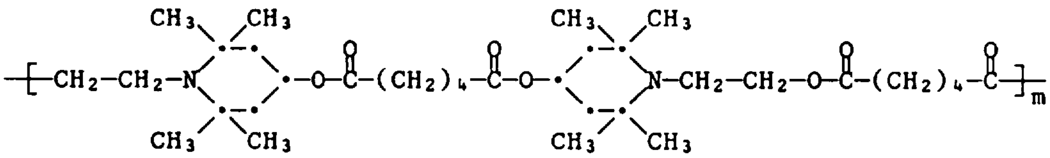

83)

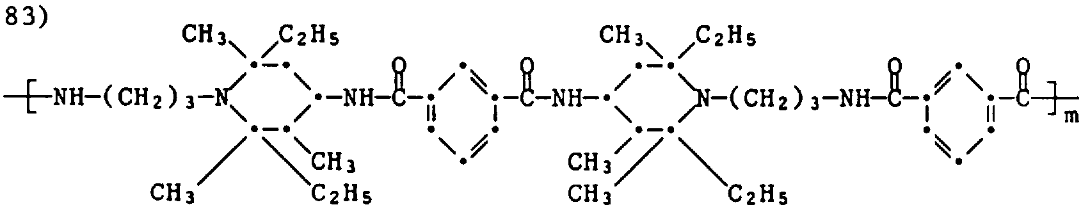

84)

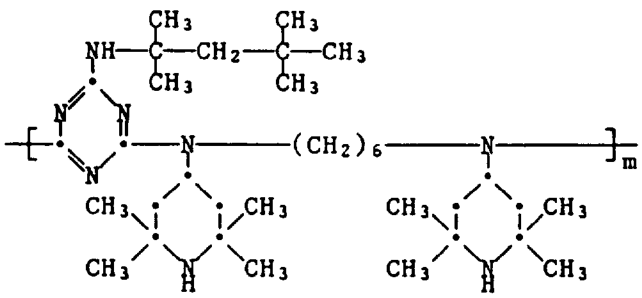

85)

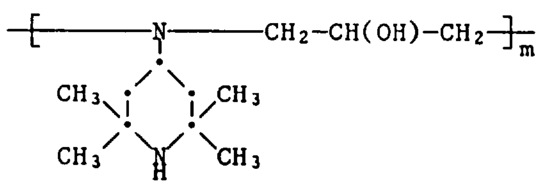

86)

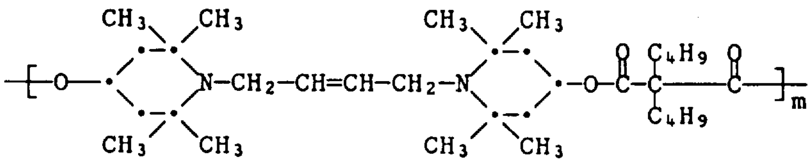

87)

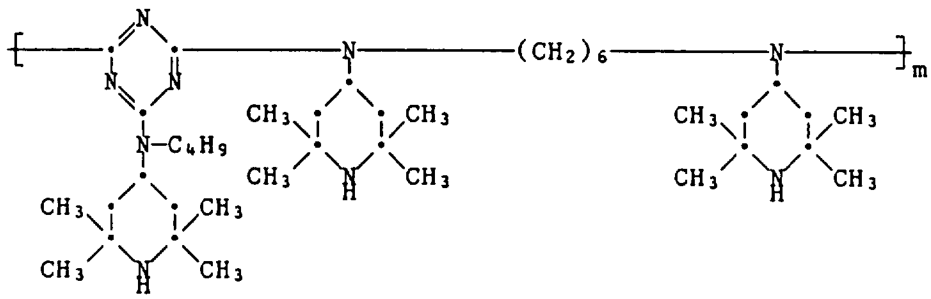

88)

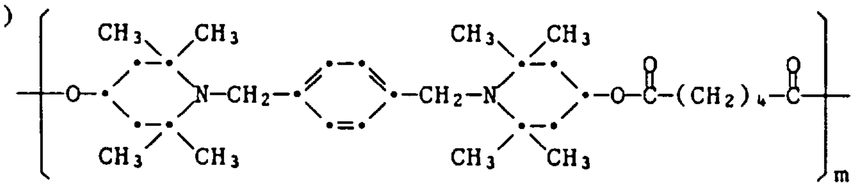

89)

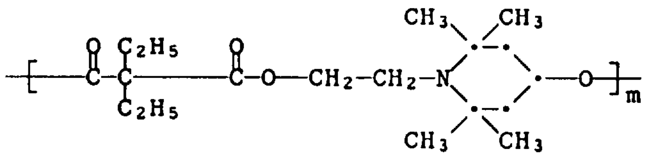

90)

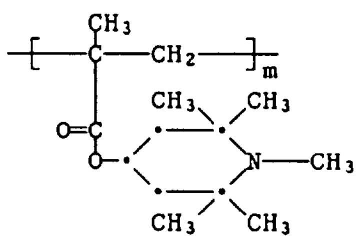

91)

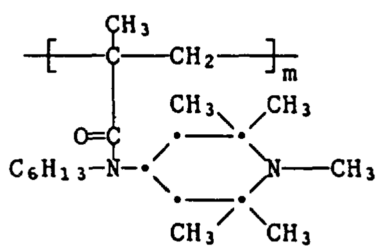

92)

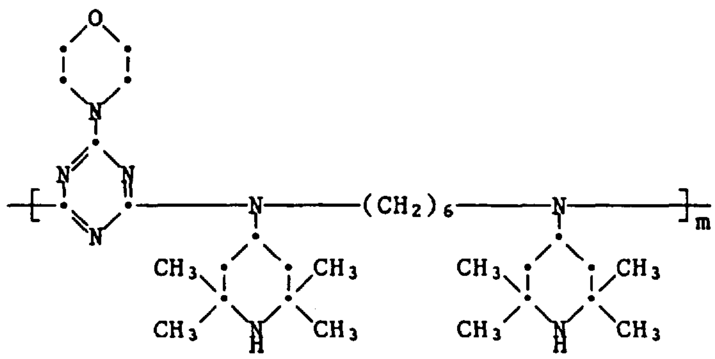

93)

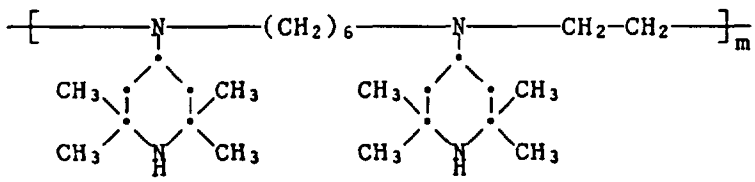

94)

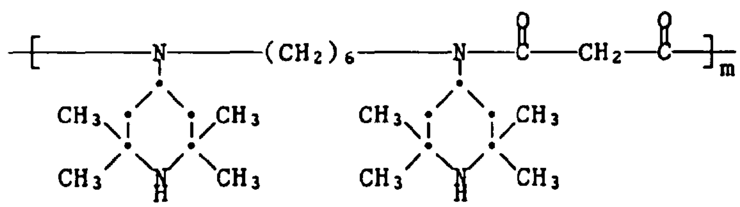

(g) Verbindungen der Formel IX

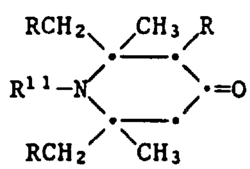

(IX)

worin R und $R^{11}$ die unter (a) angegebene Bedeutung haben.

Bevorzugt sind Verbindungen der Formel IX, worin R Wasserstoff oder Methyl ist und $R^{11}$ Wasserstoff oder Methyl ist.

Beispiele für solche Verbindungen sind:

95) 2,2,6,6-Tetramethyl-4-piperidon (Triacetonamin)

96) 1,2,2,6,6-Pentamethyl-4-piperidon

97) 2,2,6,6-Tetramethyl-4-piperidon-1-oxyl

98) 2,3,6-Trimethyl-2,6-diethyl-4-piperidon

Besonders zweckmässig werden in den erfindungsgemässen Zusammensetzungen als Komponente a) cyclische sterisch gehinderte Amine eingesetzt, die keine Estergruppen enthalten und bevorzugt solche, die im Molekül mindestens einen Triazinring enthalten. Solche Amine enthalten vorzugsweise mindestens eine Gruppe der Formel III und gehören besonders bevorzugt einer der vorstehend geschilderten Typen (a) bis (g) an.

Bevorzugt sind Polymerzusammensetzungen, wie beschrieben, enthaltend als b) eine organische Zinkverbindung, wobei die Zinkverbindung ein Salz einer Carbonsäure mit 7 bis 20 C-Atomen oder ein $C_7$-$C_{20}$-Alkylphenolat darstellt.

Bei den Zinkverbindungen aus der Reihe der Carboxylate handelt es sich bevorzugt um Salze von Carbonsäuren mit 7 bis 20 C-Atomen, beispielsweise Benzoate, Alkenoate oder Alkanoate, bevorzugt Stearate, Oleate, Laurate,

Palmitate, Hydroxystearate oder 2-Ethylhexanoate. Besonders bevorzugt sind Stearate, Oleate und p-tert-Butylbenzoate.

Namentlich zu erwähnen sind, als Beispiele, die Zinksalze der monovalenten Carbonsäuren, wie Essigsäure, Propionsäure, Buttersäure, Valeriansäure, Capronsäure, Enanthsäure, Caprylsäure, Neodecansäure, 2-Ethylhexansäure, Pelargonsäure, Caprinsäure, Undecansäure, Laurinsäure, Tridecansäure, Myristylsäure, Palmitinsäure, Isostearinsäure, Stearinsäure, 12-Hydroxystearinsäure, Behensäure, Montansäure, Benzoesäure, Monochlorbenzoesäure, p-tert-Butylbenzoesäure, Dimethylhydroxybenzoesäure, 3,5-Di-tert-butyl-4-hydroxybenzoesäure, Tolylsäure, Dimethylbenzoesäure, Ethylbenzoesäure, Cuminsäure, n-Propylbenzoesäure, Aminobenzoesäure, N,N-Dimethylbenzoesäure, Acetoxybenzoesäure, Salicylsäure, p-tert-Octylsalicylsäure, Oleinsäure, Elaidinsäure, Sorbinsäure, Linolsäure, Linolensäure, Thioglykolsäure, Mercaptopropionsäure und Octylmercaptopropionsäure; Zinksalze der Monoester und Monoamide der divalenten Carbonsäuren, wie Oxalsäure, Malonsäure, Bernsteinsäure, Glutaminsäure, Adipinsäure, Pimelinsäure, Suberinsäure, Azelainsäure, Sebacinsäure, Phthalsäure, Isophthalsäure, Terephthalsäure, Hydroxyphthalsäure, Chlorphthalsäure, Aminophthalsäure, Maleinsäure, Fumarsäure, Citraconsäure, Mesaconsäure, Haconsäure, Aconitrinsäure und Thiodipropionsäure; und der Di- oder Triester der tri-oder tetravalenten Carbonsäuren, wie Hemimellitsäure, Trimellitsäure, Mellophansäure, Pyromellitsäure und Mellitsäure.

Als Chelate von 1,3-Diketonen und β-Ketocarbonsäureestern sind beispielsweise Verbindungen der Formel

$$Zn(R-\underset{\substack{\|\\O}}{C}-CR'R''-\underset{\substack{\|\\O}}{C}-R''')_2 \text{ zu nennen,}$$

wobei R, R', R" und R"' unabhängig voneinander Alkyl mit 1 bis 18 C-Atomen, Alkenyl mit 2 bis 18 C-Atomen, Cycloalkyl mit 5 bis 12 Ring-C-Atomen, mit 1 bis 3 $C_1$-$C_4$-Alkyl substituiertes Cycloalkyl mit 5 bis 12 C-Atomen, Alkyl mit 1 bis 18 C-Atomen, das mit Cycloalkyl mit 5-12 Ring-C-Atomen substituiert ist, Phenyl-$C_1$-$C_{18}$-alkyl, $C_1$-$C_{18}$-Alkylphenyl, Phenyl, Halogenalkyl, Halogenphenyl, Alkoxyalkyl oder Alkylendioxyalkyl oder -phenyl darstellen.

Beispiele für R, R', R" und R"' sind Methyl, Ethyl, Propyl, Isopropyl, Isobutyl, n-Butyl, sec.-Butyl, tert.-Butyl, 1-Pentyl, 3-Pentyl, 1-Hexyl, 1-Heptyl, 3-Heptyl, 1-Octyl, 2,4,4-Trimethylphenyl, tert-Octyl, Nonyl, Decyl, Tridecyl, Pentadecyl, Heptadec-8-en-1-yl, n-Octadecyl, Allyl, Methallyl. 2-Hexenyl, 1-Methylcyclopentyl, Cyclohexyl, Cyclohexanpropyl, Phenyl, m-Tolyl, p-Ethylphenyl, tert.Butylphenyl, Benzyl, Phenylpropyl und Nonylbenzyl.

Beispiele für Halogenalkyl oder Halogenphenyl sind Dichlormethyl, Heptafluoropropyl, p-Bromphenyl und 3,4-Dichlorobenzyl. Alkoxyalkyl kann Ethoxymethyl, n-Butoxymethyl, 2-Methoxyethyl, 2-Methoxyphenyl und 4-n-Octoxyphenylbenzyl bedeuten. Alkylendioxyalkyl oder -phenyl kann beispielsweise 3-(Ethylendioxypropyl) oder 3,4-Methylendioxyphenyl sein.

Sinngemäss lassen sich auch alle mit obiger Aufstellung nicht umfassten bereits genannten 1,3-Diketone in Form ihrer Zink-Chelat-Form als organische Zinkverbindungen einsetzen.

Bevorzugt sind Polymerzusammensetzungen wie oben beschrieben, enthaltend als c) mindestens eine Verbindung aus der Reihe der Hydrotalcite der allgemeinen Formel I,

$$M^{2+}{}_{1-x}\cdot Al_x\cdot(OH)_2\cdot(A^{n-})_{x/2}\cdot mH_2O, \qquad (I)$$

wobei $M^{2+}$ die Bedeutung von Mg oder einer festen Lösung von Mg und Zn hat,
$A^{n-}$ für $CO_3{}^{2-}$ steht, x eine Zahl von 0 bis 0,5 ist und m eine Zahl von 0 bis 2 ist.

Bevorzugt sind Polymerzusammensetzungen, wie oben beschrieben, enthaltend mindestens eine der Verbindungen der Formeln

$$4MgO\cdot Al_2O_3\cdot CO_2\cdot 9H_2O,$$

$$4MgO\cdot Al_2O_3\cdot CO_2\cdot 6H_2O,$$

$$ZnO\cdot 3MgO\cdot Al_2O_3\cdot CO_2\cdot 8\text{-}9H_2O$$

oder

$$ZnO\cdot 3MgO\cdot Al_2O_3\cdot CO_2\cdot 5\text{-}6H_2O.$$

Die Polymerzusammensetzungen können auch weitere organische oder anorganische Ca- und darüberhinaus Ba-, Mg- und Pb-Verbindungen enthalten. Bevorzugt sind Calcium-Verbindungen. Zweckmässig wird mindestens eine organische oder anorganische Ca-, Ba-, Mg und/oder Pb-Verbindung aus der Reihe der aliphatischen $C_1$-$C_{22}$-Carboxylate, der olefinischen $C_2$-$C_{22}$-Carboxylate, der aliphatischen $C_2$-$C_{22}$-Carboxylate, die mit wenigstens einer OH-Gruppe substituiert sind, der cyclischen und bicyclischen Carboxylate mit 5-22 C-Atomen, der aromatischen $C_6$-$C_{22}$-Carboxylate, der mit wenigstens einer OH-substituierten aromatischen $C_6$-$C_{22}$-Carboxylate, der $C_1$-$C_{16}$-alkylsubstituierten Phenylcarboxylate, der Phenyl-$C_1$-$C_{16}$-alkylcarboxylate, der $C_6$-$C_{18}$-Phenolate, der $C_5$-$C_{26}$-Chelate von 1,3-Diketonen oder β-Ketocarbonsäureestern, der Dehydracetsäure und deren Derivaten, der Carbonate, Sulfate, Oxide, Hydroxide, basischen Oxide und Misch-Oxide, der Mercaptide auf der Basis von Marcaptocarbonsäureestern, der Glycinate, Phosphate, Phosphite, Phosphonite, Phosphonate, der Partialester von Phosphonaten, der Sulfonate und Sulfinate, wobei die Carbonate, Sulfate und Phosphite auch in überbasischen Formen angewendet werden können, angewendet.

Beispiele und Bevorzugungen für die organischen und anorganischen Ca-, und darüber hinaus Ba-, Mg- und Pb-Verbindungen sind sinngemäss aus den Beispielen und Bevorzugungen, die zu den Zinkverbindungen angegeben sind, abzuleiten. Dabei soll jeweils anstelle des Zinks eines der Metalle der Reihe Calcium, Barium, Magnesium oder Blei gelesen werden.

Als chlorhaltige Polymere können beispielsweise aufgezählt werden: Polymere des Vinylchlorides, Vinylharze, enthaltend Vinylchlorideinheiten in deren Struktur, wie Copolymere des Vinylchlorids und Vinylester von aliphatischen Säuren, insbesondere Vinylacetat, Copolymere des Vinylchlorids mit Estern der Acryl- und Methycrylsäure und mit Acrylnitril, Copolymere des Vinylchlorids mit Dienverbindungen und ungesättigten Dicarbonsäuren oder deren Anhydride, wie Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenechlorids mit ungesättigten Aldehyden, Ketonen und anderen, wie Acrolein, Crotonaldehyd, Vinylmethylketon, Vinylmethylether, Vinylisobutylether und ähnliche; Polymere des Vinylidenchlorids und Copolymere desselben mit Vinylchlorid und anderen polymerisierbaren Verbindungen; Polymere des Vinylchloracetates und Dichlordivinylethers; chlorierte Polymere des Vinylacetates, chlorierte polymerische Ester der Acrylsäure und der alpha-substituierten Acrylsäure; Polymere von chlorierten Styrolen, zum Beispiel Dichlorstyrol; chlorierte Gummis; chlorierte Polymere des Ethylens; Polymere und nachchlorierte Polymere von Chlorbutadiens und deren Copolymere mit Vinylchlorid, Gummi-Hydrochlorid und chloriertes Gummi-Hydrochlorid; sowie Mischungen der genannten Polymere unter sich oder mit anderen polymerisierbaren Verbindungen.

Ferner sind umfasst die Pfropfpolymerisate von PVC mit EVA, ABS und MBS. Bevorzugte Substrate sind auch Mischungen der vorstehend genannten Homo-und Copolymerisate, insbesondere Vinylchlorid-Homopolymerisate, mit anderen thermoplastischen oder/und elastomeren Polymeren, insbesondere Blends mit ABS, MBS, NBR, SAN, EVA, CFE, MBAS, PMA, PMMA, EPDM und Polylactonen.

Weiterhin bevorzugt sind Suspensions- und Massepolymere, sowie Emulsionspolymere.

Als chlorhaltiges Polymerisat ist Polyvinylchlorid besonders bevorzugt, insbesondere Suspensionspolymerisat und Massepolymerisat.

Zweckmässig sind Polymerzusammensetzungen, wie vorstehend beschrieben, enthaltend, bezogen auf 100 Gew.-Teile Zusammensetzung,

a) 0,01 bis 1,5 Gew.-Teile an cyclischen oder nicht-cyclischen sterisch gehinderten Aminen,

b) 0,01 bis 2 Gew.-Teile an organischen oder anorganischen Zinkverbindungen
und

c) 0,1 bis 3 Gew.-Teile an Verbindungen aus der Reihe der Hydrotalcite.

Bevorzugte Mengenbereiche für die sterisch gehinderten Amine in der Polymerzusammensetzung sind 0,05 bis 1,0 Gew.-Teile, bezogen auf 100 Gew.-Teile Zusammensetzung. Besonders bevorzugt sind 0,1 bis 0,5 Gew.-Teile.

Bevorzugte Mengenbereiche für die Zinkverbindungen in der Polymerzusammensetzung sind 0,05 bis 1 Gew.-Teile, bezogen auf 100 Gew.-Teile Zusammensetzung.

Bevorzugte Mengenbereiche für die Hydrotalcite in der Polymerzusammensetzung sind 0,3 bis 2 Gew.-Teile, bezogen auf 100 Gew.-Teile Zusammensetzung. Besonders bevorzugt sind 0,4 bis 1 Gew.-Teil.

Das chlorhaltige Polymer kann einen Weichmacher enthalten, wobei chlorhaltige Polymere, die keinen Weichmacher enthalten, bevorzugt sind.

Als organische Weichmacher kommen beispielsweise solche aus den folgenden Gruppen in Betracht:

A) <u>Phthalate</u> (Phthalsäureester)

Beispiele für solche Weichmacher sind Dimethyl-, Diethyl-, Dibutyl-, Dihexyl-, Di-2-ethylhexyl-, Di-n-octyl-, Di-iso-octyl-, Di-iso-nonyl-, Di-iso-decyl-, Di-iso-tridecyl-, Dicyclohexyl-, Di-methylcyclohexyl-, Dimethylglycol-, Dibutylglycol-, Benzylbutyl- und Diphenyl-phthalat sowie Mischungen von Phthalaten wie $C_7$-$C_9$- und $C_9$-$C_{11}$-Alkylphthalate aus überwiegend linearen Alkoholen, $C_6$-$C_{10}$-n-Alkylphthalate und $C_8$-$C_{10}$-n-Alkylphthalate. Bevorzugt sind davon Dibutyl-, Dihexyl-, Di-2-ethylhexyl-, Di-n-octyl-, Di-iso-octyl-, Di-iso-nonyl-, Di-iso-decyl-, Di-iso-tridecyl- und Benzylbutyl-phthalat sowie die genannten Mischungen von Alkylphthalaten. Besonders bevorzugt ist Di-2-ethylhexylphthalat (DOP).

B) Ester aliphatischer Dicarbonsäuren, insbesondere Ester von Adipin-, Azelain- und Sebazinsäure

Beispiele für solche Weichmacher sind Di-2-ethylhexyladipat, Di-iso-octyladipat (Gemisch), Di-iso-nonyladipat (Gemisch), Di-iso-decyladipat (Gemisch), Benzylbutyladipat, Benzyloctyladipat, Di-2-ethylhexylazelat, Di-2-ethylhexylsebacat und Di-iso-decylsebacat (Gemisch). Bevorzugt sind Di-2-ethylhexyladipat und Di-iso-octyladipat.

C) Trimellithsäureester,

beispielsweise Tri-2-ethylhexyltrimellithat, Tri-iso-decyltrimellithat (Gemisch), Tri-iso-tridecyltrimellithat, Tri-iso-octyltrimellithat (Gemisch) sowie Tri-$C_6$-$C_8$-alkyl, Tri-$C_6$-$C_{10}$-alkyl-, Tri-$C_7$-$C_9$-alkyl-und Tri-$C_9$-$C_{11}$-alkyl-trimellithate. Die letztgenannten Trimellithate entstehen durch Veresterung der Trimellithsäure mit den entsprechenden Alkanolgemischen. Bevorzugte Trimellithate sind Tri-2-ethylhexyltrimellithat und die genannten Trimellithate aus Alkanolgemischen.

D) Polymerweichmacher

Eine Definition dieser Weichmacher und Beispiele für solche sind im "Plastics Additives Handbook", Herausgeber H. Gächter und H. Müller, Hanser Publishers, 1985, Seite 284, Kapitel 5.7.10 sowie in "PVC Technology ", Herausgeber W.V. Titow, 4th. Ed., Elsevier Publ., 1984, Seiten 165-170 angegeben. Die gebräuchlichsten Ausgangsmaterialien für die Herstellung der Polyesterweichmacher sind: Dicarbonsäuren wie Adipin-, Phthal-, Azelain- und Sebacinsäure; Diole wie 1,2-Propandiol, 1,3-Butandiol, 1,4-Butandiol, 1,6-Hexandiol, Neopentylglycol und Diethylenglykol; Monocarbonsäuren wie Essig-, Capron-, Capryl-, Laurin-, Myristin-, Palmitin-, Stearin-, Pelargon-und Benzoesäure; monofunktionelle Alkohole wie Isooctanol, 2-Ethylhexanol, Isodecanol sowie $C_7$-$C_9$-Alkanol- und $C_9$-$C_{11}$-Alkanolgemische. Besonders vorteilhaft sind Polyesterweichmacher aus den genannten Dicarbonsäuren und monofunktionellen Alkoholen.

E) Phosphorsäureester

Eine Definition dieser Ester ist im vorstehend genannten "Plastics Additives Handbook" auf Seite 271, Kapitel 5.7.2 zu finden. Beispiele für solche Phosphorsäureester sind Tributylphosphat, Tri-2-ethylbutylphosphat, Tri-2-ethylhexylphosphat, Trichlorethylphosphat, 2-Ethylhexyl-di-phenylphosphat, Kresyldiphenylphosphat, Triphenylphosphat, Trikresylphosphat und Trixylenylphosphat. Bevorzugt ist Tri-2-ethylhexyl-phosphat.

F) Chlorierte Kohlenwasserstoffe (Paraffine)

G) Kohlenwasserstoffe

H) Monoester, z.B. Butyloleat, Phenoxyethyloleat, Tetrahydrofurfuryloleat und Alkylsulfonsäureester.

I) Glycolester, z.B. Diglykolbenzoate.

Definitionen und Beispiele für Weichmacher der Gruppen F) bis I) sind den folgenden Handbüchern zu entnehmen: "Plastics Additives Handbook", Herausgeber H. Gächter und H. Müller, Hanser Publishers, 1985, Seite 284, Kapitel 5.7.11 (Gruppe F)), und Kapitel 5.7.13 (Gruppe G)).
"PVC Technology", Herausgeber W.V. Titow, 4th. Ed., Elsevier Publishers, 1984, Seiten 171-173, Kapitel 6.10.2 (Gruppe F)), Seite 174, Kapitel 6.10.5 (Gruppe G)), Seite 173, Kapitel 6.10.3 (Gruppe H)) und Seiten 173-174, Kapitel 6.10.4 (Gruppe I)).

Besonders bevorzugt sind Weichmacher aus den Gruppen A) bis E), insbesondere A) bis C), vor allem die in diesen Gruppen als bevorzugt herausgestellten Weichmacher. Besonders günstig ist Di-2-ethylhexylphthalat (DOP).

Die Weichmacher können in einer Menge von beispielsweise 15 bis 70, zweckmässig 15 bis 60 und insbesondere 20 bis 50 Gew.-Teilen, bezogen auf 100 Gew.-Teile Polymerzusammensetzung, angewendet werden.

Die Polymerzusammensetzungen nach vorliegender Erfindung können auch weitere Stabilisatoren enthalten, so die vorstehend genannte Komponente d) 1,3-Diketone, die zweckmässig in Mengen von 0,05 bis 5, vorzugsweise in Mengen von 0,10 bis 1 Gew.-Teil und insbesondere in Mengen von 0,5 bis 1 Gew.-Teil, jeweils bezogen auf 100 Gew.-Teile Zusammensetzung, angewendet werden kann.

Ein anderer Stabilisator, der ebenfalls Anwendung finden kann, ist die vorstehend beschriebene Komponente e) - die organischen oder anorganischen Calciumverbindungen -, die zweckmässig in Mengen von 0,05 bis 5 Gew.-Teilen, vorzugsweise in Mengen von 0,1 bis 1 Gew.-Teil und insbesondere in Mengen von 0,5 bis 1 Gew.-Teil, jeweils bezogen auf 100 Gew.-Teile Zusammensetzung, angewendet werden können.

Finden weitere Stabilisatoren aus der Reihe der organischen oder anorganischen Ca-, Ba-, Mg- oder Pb-Verbindungen, wie oben erwähnt, Anwendung, so können beispielsweise 0 bis 5 Gew.-Teile, bezogen auf die Zusammensetzung, eingesetzt werden. Zweckmässig sind 0,05 bis 5 Gew.-Teile, bevorzugt 0,1 bis 1 Gew.-Teile.

Die erfindungsgemässen Zusammensetzungen können auch weitere, für chlorhaltige Thermoplasten übliche Stabilisatoren enthalten. So enthalten sie beispielsweise 0-3 Teile, bezogen auf die Zusammensetzung, insbesondere 0-1,5, vor allem 0-1 Teile eines oder mehrerer Phosphite. Solche Phosphite können etwa in einer Menge von 0,01-3, insbesondere 0,01-1,5, z.B. 0,01-1, bevorzugt 0,1-0,6, z.B. 0,2-0,5 Teilen enthalten sein. Beispiele für derartige Phosphite sind etwa solche der Formeln

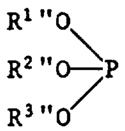 und 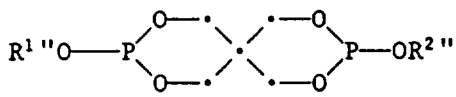 ,

worin $R^{1''}$, $R^{2''}$ und $R^{3''}$ gleich oder verschieden sind und $C_6$-$C_{18}$-Alkyl, $C_6$-$C_{18}$-Alkenyl, einen substituierten oder unsubstituierten Phenylrest oder $C_5$-$C_7$-Cycloalkyl bedeuten.

Bedeuten $R^{1''}$, $R^{2''}$ und $R^{3''}$ $C_6$-$C_{18}$-Alkyl, so handelt es sich dabei z.B. um n-Hexyl, n-Octyl, n-Nonyl, Decyl, Dodecyl, Tetradecyl, Hexadecyl oder Octadecyl. Bevorzugt sind Alkylgruppen mit 8 bis 18 C-Atomen.

Als substituiertes Phenyl bedeuten $R^{1''}$, $R^{2''}$ und $R^{3''}$ beispielsweise Tolyl, Ethylphenyl, Xylyl, Cumyl, Cymyl, Kresyl, 4-Methoxyphenyl, 2,4-Dimethoxyphenyl, Ethoxyphenyl, Butoxyphenyl, p-n-Octylphenyl, p-n-Nonylphenyl oder p-n-Dodecylphenyl.

Besonders geeignete Phosphite sind Trioctyl-, Tridecyl-, Tridodecyl-, Tritetradecyl, Tristearyl-, Trioleyl-, Triphenyl-, Trikresyl-, Tris-p-nonylphenyl- oder Tricyclohexylphosphit und besonders bevorzugt sind die Aryl-Dialkyl- sowie die Alkyl-Diaryl-Phosphite, wie z.B. Phenyldidecyl-, (2,4-Di-tert.-butylphenyl)-di-dodecylphosphit, (2,6-Di-tert.-butylphenyl)-di-dodecylphosphit und die Dialkyl-und Diaryl-pentaerythrit-diphosphite, wie Distearylpentaerythrit-diphosphit.

Bevorzugte organische Phosphite sind Distearyl-pentaerythrit-diphosphit, Trisnonylphenylphosphit und Phenyldidecyl-phosphit.

Ferner können in den erfindungsgemässen Zusammensetzungen weitere bekannte Costabilisatoren enthalten sein, beispielsweise 0-2, insbesondere 0-1,5 Teile, bezogen auf die Zusammensetzung. Sie sind dann vorzugsweise in einer Menge von 0,01-2, insbesondere 0,05-1,5, z.B. 0,1-1, vor allem 0,1-0,5 Teilen vorhanden. Als derartige Costabilisatoren seien Aminocrotonsäureester, Dehydracetsäure, 2,4-Dihydroxybenzophenon, 2,4-Dihydroxy-4′-tert.-butylbenzophenon Dihydropyridin-Derivate und Pyrrolderivate genannt.

Als Aminocrotonsäureester kommen insbesondere die Ester mit einwertigen geradkettigen $C_8$-$C_{20}$-, insbesondere $C_{12}$-$C_{18}$-Alkoholen und/oder mit 1,3- bzw. 1,4-Butandiol und/oder 1,2-Dipropylenglykol und/oder Thiodiethylenglykol in Betracht.

Als Pyrrol-Costabilisatoren sind jene besonders zu erwähnen, die in der EP-A 22 087 und der GB-A 2 078 761 beschrieben sind, z.B. der dort angegebenen Formel I, vorzugsweise jene Pyrrolderivate, die in den Ansprüchen 2-9 der EP-A 22 087 definiert sind. Als Beispiel sei 2-Methyl-3-cyclohexyloxycarbonyl-4-phenyl-1H-pyrrol genannt.

Ferner können die erfindungsgemässen Zusammensetzungen neben den vorstehend genannten fakultativen Costabilisatoren oder an deren Stelle noch weitere fakultative Bestandteile enthalten, z.B. organische Antimonverbindungen, wie Antimon-tris-[isooctyl-thioglykolat] (Isooctyl = 2-Ethylhexyl).

Andere Stabilisatoren, die in den erfindungsgemässen Zusammensetzungen angewendet werden können, sind Polyole. Die anzuwendenden Mengen sind beispielsweise bis zu 3 Gew.-Teile, bezogen auf 100 Gew.-Teile Zusammensetzung, zweckmässig bis zu 2 Gew.-Teilen und vorzugsweise 0,01 bis 1 Gew.-Teil. Typische Beispiele von Polyolen sind Pentaerythrit, Dipentaerythrit, Trimethylolpropan, Ditrimethylolpropan, Tris-(2-hydroxyethyl)isocyanurat (THEIC), wobei letzteres bevorzugt ist, Sorbit, Mannit und Inosit.

Ferner können die erfindungsgemässen Zusammensetzungen übliche Antioxidantien, Lichtstabilisatoren und UV-Adsorber enthalten. Beispiele dafür sind:

1. Antioxidantien

1.1. Alkylierte Monophenole, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tricyclohexylphenol, 2,6-Di-tert.butyl-4-methoxymethylphenol, 2,6-Di-nonyl-4-methylphenol.

1.2. Alkylierte Hydrochinone, z.B. 2,6-Di-tert.butyl-4-methoxyphenol, 2,5-Di-tert.butyl-hydrochinon, 2,5-Di-tert.amyl-hydrochinon, 2,6-Diphenyl-4-octadecyloxyphenol.

1.3. Hydroxylierte Thiodiphenylether, z.B. 2,2′-Thio-bis-(6-tert.-butyl-4-methylphenol), 2,2′-Thio-bis-(4-octylphenol), 4,4′-Thio-bis-(6-tert.butyl-3-methylphenol), 4,4′-Thio-bis-(6-tert.butyl-2-methylphenol).

1.4. Alkyliden-Bisphenole, z.B. 2,2′-Methylen-bis-(6-tert.butyl-4-methylphenol), 2,2′-Methylen-bis-(6-tert.butyl-4-ethylphenol), 2,2′-Methylen-bis-[4-methyl-6-(α-methylcyclohexyl)-phenol], 2,2′-Methylen-bis-(4-methyl-6-cyclohexylphenol), 2,2′-Methylen-bis-(6-nonyl-4-methylphenol), 2,2′-Methylen-bis-(4,6-di-tert.butylphenol), 2,2′-Ethyliden-bis-(4,6-di-tert.butylphenol), 2,2′-Ethyliden-bis-(6-tert.butyl-4-isobutylphenol), 2,2′-Methylen-bis-[6-(α-methylbenzyl)-4-nonylphenol], 2,2′-Methylen-bis-[6-(α,α-dimethylbenzyl)-4-nonylphenol], 4,4′-Methylen-bis-(2,6-di-tert.-butylphenol), 4,4′-Methylen-bis-(6-tert.butyl-2-methylphenol), 1,1-Bis-(5-tert.butyl-4-hydroxy-2-methylphenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methylphenyl)-3-n-dodecylmercaptobutan, Ethylenglycol-bis-[3,3-bis-(3′-tert.-butyl-4′-hydroxyphenyl)-butyrat], Bis-(3-tert.butyl-4-hydroxy-5-methylphenyl)-dicyclopentadien, Bis-[2-(3′-tert.butyl-2′-hydroxy-5′-methylbenzyl)-6-tert.butyl-4-methyl-phenyl]-terephthalat.

1.5 Benzylverbindungen, z.B. 1,3,5-Tris-(3,5-di-tert.butyl-4-hydroxybenzyl)-2,4,6-trimethylbenzol, Bis-(3,5-di-tert.butyl-4-hydroxybenzyl)-sulfid, 3,5-Di-tert.butyl-4-hydroxybenzyl-mercaptoessigsäure-isooctylester, Bis-(4-tert.butyl-3-hydroxy-2,6-dimethylbenzyl)dithiol-terephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocyanurat, 3,5-Di-tert.butyl-4-hydroxybenzyl-phosphonsäure-dioctadecylester, Ca-Salz des 3,5-Di-tert.butyl-4-hydroxybenzyl-phosphonsäure-monoethylester, 1,3,5-Tris-(3,5-dicyclohexyl-4-hydroxybenzyl)isocyanurat.

1.6. Acylaminophenole, z.B. 4-Hydroxy-laurinsäureanilid, 4-Hydroxystearinsäureanilid, 2,4-Bis-(octylmercapto)-6-(3,5-di-tert.butyl-4-hydroxyanilino)-s-triazin, N-(3,5-di-tert.butyl-4-hydroxyphenyl)-carbaminsäureoctylester.

1.7. Ester der β-(3,5-Di-tert.butyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxyethyl)-isocyanurat, N,N′-Bis-(hydroxyethyl)-oxalsäurediamid.

1.8. Ester der β-(5-tert.Butyl-4-hydroxy-3-methylphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N′-Bis-(hydroxyethyl)-oxalsäurediamid.

1.9. Ester der β-(3,5-Dicyclohexyl-4-hydroxyphenyl)-propionsäure mit ein-oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N′-Bis-(hydroxyethyl)-oxalsäurediamid.

1.10. Amide der β-(3,5-Di-tert.butyl-4-hydroxyphenyl)-propionsäure, wie z.B. N,N′-Bis-(3,5-di-tert.butyl-4-hydroxyphenylpropionyl)-hexamethylendiamin, N,N′-Bis-(3,5-di-tert.butyl-4-hydroxyphenylpropionyl)-trimethylendiamin, N,N′-Bis-(3,5-di-tert.butyl-4-hydroxyphenylpropionyl)-hydrazin.

2. UV-Absorber und Lichtschutzmittel

2.1. 2-(2′-Hydroxyphenyl)-benztriazole, wie z.B. das 5′-Methyl-, 3′,5′-Di-tert.butyl-, 5′-tert.Butyl-, 5′-(1,1,3,3-Tetramethylbutyl)-, 5-Chlor-3′,5′-di-tert.butyl-, 5-Chlor-3′-tert.butyl-5′-methyl-, 3′-sec.Butyl-5′-tert.butyl, 4′-Octoxy-, 3′,5′-Di-tert.amyl-, 3′,5′-Bis-(α,α-dimethylbenzyl)-Derivat.

2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2′,4′-Trihydroxy-, 2′-Hydroxy-4,4′-dimethoxy-Derivat.

2.3. Ester von gegebenenfalls substituierten Benzoesäuren, wie z.B. 4-tert.Butyl-phenylsalicylat, Phenylsalicylat, Octylphenyl-salicylat, Dibenzoylresorcin, Bis-(4-tert.butylbenzoyl)-resorcin, Benzoylresorcin, 3,5-Di-tert.butyl-4-hydroxybenzoesäure-2, 4-di-tert.butylphenylester, 3,5-Di-tert.butyl-4-hydroxybenzoesäurehexadecylester.

2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.

2.5. Nickelverbindungen, wie z.B. Nickelkomplexe des 2,2′-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.

2.6. Oxalsäurediamide, wie z.B. 4,4′-Di-octyloxy-oxanilid, 2,2′-Di-octyloxy-5,5′-di-tert.butyl-oxanilid, 2,2′-Di-dodecyloxy-5,5′di-tert.butyloxanilid, 2-Ethoxy-2′-ethyl-oxanilid, N,N′-Bis-(3-dimethylaminopropyl)-oxalamid, 2-Ethoxy-5-tert.butyl-2′-ethyloxanilid und dessen Gemisch mit 2-Ethoxy-2′-ethyl-5,4′-di-tert.butyl-oxanilid, Gemische von o-und p-Methoxy- sowie von o- und p-Ethoxy-di-substituierten Oxaniliden.

2.7. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis (2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin.

Je nach Verwendungszweck können in die erfindungsgemässen Zusammensetzungen ausserdem noch weitere übliche Zusätze eingearbeitet werden, wie z.B.

3. Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Bis-(2,4-di-tert.butylphenyl)-pentaerythritdiphosphit, Tristearyl-sorbit-triphosphit, Tetrakis-(2,4-di-tert.butylphenyl)-4,4′-biphenylen-diphosphonit, 3,9-Bis-(2,4-di-tert.butylphenoxy)-2,4,8,10-tetraoxa-3,9-diphosphaspiro[5.5]undecan.

4. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat.

5. Basische Co-Stabilisatoren, wie z.B. Harnstoff-Derivate, Thioharnstoff-Derivate, Alkali- und Erdalkalisalze höherer Fettsäuren, beispielsweise Mg-Stearat, Na-Ricinoleat, K-Palmitat, Trishydroxyethylisocyanurat.

6. Füllstoffe und Verstärkungsmittel, wie z.B. Calciumcarbonat, Silikate, Glasfasern, Asbest, Talk, Kaolin, Glimmer, Bariumsulfat, Metalloxide und -hydroxide, Russ, Graphit.

7. Sonstige Zusätze, wie z.B. Weichmacher, Gleitmittel, Emulgatoren, Pigmente, Optische Aufheller, Flammschutzmittel, Antistatika, Treibmittel.

Beispiele weiterer besonders wertvoller Costabilisatoren, die einzeln oder zu mehreren - neben den oder an Stelle der - vorstehend genannten fakultativen Costabilisatoren angewendet werden können, wobei die Einsatzmenge beispielsweise für jeden Costabilisator 0 bis 2,0 Gew.-Teile, zweckmässig 0,05-1,0 Gew.-Teile und insbesondere 0,1 bis 0,5 Gew.-Teile, jeweils bezogen auf 100 Gew.-Teile Zusammensetzung, beträgt, sind nachfolgend beispielhaft aufgezählt.

Stabilisatorgemische aus einem Salz einer organischen Säure und einem Polyol, wobei das Polyol ein synergistisches Gemisch aus Ditrimethylolpropan in Kombination mit einem unterschiedlichen Polyol mit 5 bis 15 Kohlenstoffatomen und 2 bis 10 Hydroxylgruppen und einem Schmelzpunkt von nicht unter 100°C darstellt. Eine umfassende Darstellung, Beispiele und Bevorzugungen sind der Europäischen Patentschrift 0 058 447 zu entnehmen.

Stabilisatorgemische im wesentlichen bestehend aus Stickstoff-freien Ketosäuren mit mindestens 8-C-Atomen und einem Metallsalz einer organischen Stickstoff-freien Monocarboxylsäure mit 6 bis 24 C-Atomen oder den Salzen der Ketoessigsäure mit 4 bis 33 C-Atomen und einem mit einem Kohlenwasserstoff substituierten Phenol. Eine ausführliche Beschreibung derartiger Stabilisatorgemische, Beispiele und Bevorzugungen sind der GB 1 099 731 zu entnehmen.

Verbindungen der Formel

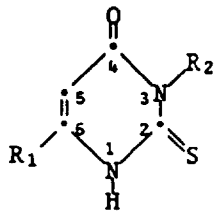,

worin $R_1$ $C_1$-$C_{18}$-Alkyl, $C_3$-$C_{18}$-Alkenyl, Phenyl, $C_7$-$C_{12}$-Phenylalkyl oder am Phenylring durch $C_1$-$C_4$-Alkyl und/oder Chlor substituiertes $C_7$-$C_{12}$-Phenylalkyl ist und $R_2$ $C_1$-$C_{18}$-Alkyl, durch Hydroxy substituiertes $C_2$-$C_{22}$-Alkyl oder durch Hydroxy und eine Gruppe $-XR_3$ substituiertes $C_2$-$C_{22}$-Alkyl ist, wobei X Sauerstoff oder Schwefel ist und $R_3$ $C_1$-$C_{18}$-Alkyl, Phenyl oder $C_7$-$C_{12}$-Phenylalkyl darstellt, oder $R_2$ ferner $C_3$-$C_{18}$-Alkenyl, $C_7$-$C_{12}$-Phenylalkyl oder am Phenylring durch $C_1$-$C_4$-Alkyl und/oder Chlor substituiertes $C_7$-$C_{12}$-Phenylalkyl bedeutet.

Stabilisatorgemische enthaltend

0,7-2 Teile Thiodiethylenglykol-bis-acetoacetat der Formel $(H_3CCOCH_2COOCH_2CH_2)_2S$,
0-0,5 Teile mindestens eines Ca-, Ba- oder/und Mg-Salzes einer aliphatischen $C_8$-$C_{24}$-Monocarbonsäure oder -Hydroxymonocarbonsäure oder der Benzoesäure oder tert.-Butylbenzoesäure
0,01-0,2 Teile mindestens eines Zn-Salzes einer aliphatischen $C_8$-$C_{24}$-Monocarbonsäure oder -Hydroxymonocarbonsäure oder der Benzoesäure oder tert.-Butylbenzoesäure, die ferner mit
3-10 Teile von epoxidierten ungesättigten Fettsäureestern und
10-70 Teile mindestens eines organischen Weichmachers gemischt sind. Eine ausführliche Beschreibung, Beispiele und Bevorzugungen sind der GB 2 212 808 zu entnehmen.

Stabilisatorgemische enthaltend

0,7-2 Teile Thiodiethylenglykol-bis-acetoacetat der Formel $(H_3CCOCH_2COOCH_2CH_2)_2S$,
0-0,5 Teile eines Ca-, Ba- oder/und Mg-Salzes einer aliphatischen $C_8$-$C_{24}$-Monocarbonsäure oder -Hydroxymonocarbonsäure oder der Benzoesäure oder tert.-Butylbenzoesäure
0,01-0,2 Teile eines Zn-Salzes einer aliphatischen $C_8$-$C_{24}$-Monocarbonsäure oder -Hydroxymonocarbonsäure oder der Benzoesäure oder tert.-Butylbenzoesäure, und darüberhinaus
3-10 Teile von epoxidierten ungesättigten Fettsäureestern. Weitere Erläuterungen, Beispiele und Bevorzugungen sind der GB 2 192 004 zu entnehmen.

Verbindungen der Formel a und b

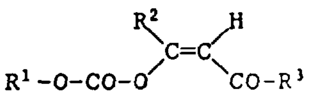 (a), 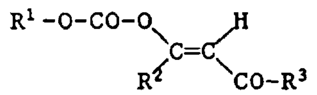 (b),

worin $R^1$ $C_1$-$C_{22}$-Alkyl, Phenyl, durch ein oder zwei $C_1$-$C_9$-Alkyl substituiertes Phenyl, $C_5$-$C_7$-Cycloalkyl oder eine Gruppe der Formeln A oder B ist

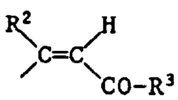 (A), 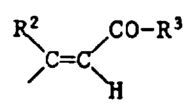 (B),

oder $R^1$ eine Gruppe der Formeln ca oder cb ist

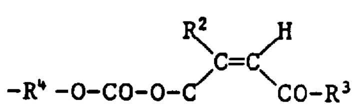 (ca),

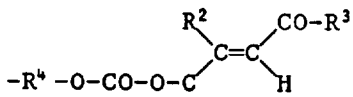

(cb),

$R^2$ und $R^3$ unabhängig voneinander $C_1$-$C_{20}$-Alkyl, Phenyl, durch ein oder zwei $C_1$-$C_9$-Alkyl substituiertes Phenyl oder $C_5$-$C_7$-Cycloalkyl sind und $R^4$ $C_2$-$C_{12}$-Alkylen ist. Weiterführende Erläuterungen, Beispiele und Bevorzugungen sind der EP 224 438 zu entnehmen.

Verbindungen der Formel

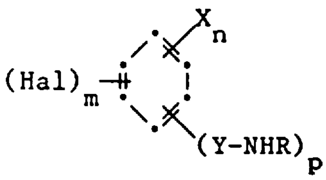

,

in welcher

m eine Zahl 0, 1 oder 2,
n eine Zahl 0, 2 oder 3 und
p eine Zahl 1 oder 2 sind
Hal für -F, -Cl, -Br oder -I steht,
X $-NH_2$, $-NHCH_3$ und/oder $-OCH_3$ oder $OC_2H_5$,
Y -CO- oder $-SO_2$- und
R -H, -OH, $-NH_2$, unsubstituiertes oder beispielsweise durch eine bis drei HO- und/oder $C_1$-$C_4$-Alkoxy- oder Phenoxygruppen substituiertes $C_1$-$C_{18}$-Alkyl, Phenyl, Benzyl oder Phenäthyl, oder R ferner eine Gruppe der Formel

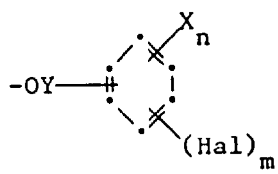

darstellt, wobei

X, Y, m, n und Hal die oben angegebene Bedeutung haben. Detaillierte Beschreibungen, Beispiele und Bevorzugungen sind der EP 122 228 und der EP 174 412 zu entnehmen.

Stabilisatorengemische erhältlich durch Mischen mindestens einer Verbindung der Formel

$$[ROOC\text{-}C_nH_{2n}S\text{-}]_3\ PX\ ,$$

in der X O oder S, n eine ganze Zahl von 1 bis 5 und R geradkettiges oder verzweigtes $C_1$-$C_{18}$-Alkyl oder substituiertes oder unsubstituiertes Cyclohexyl bedeuten, und mindestens eines PVC-Stabilisators vom Typ Me(II)-Carboxylat und/oder Me(II)-Phenolat, wobei Me(II) ein oder mehrere Metalle aus der Reihe Ba, Sr, Ca, Mg, Zn und Cd bedeutet, und wobei, bezogen auf das PVC, 0,01 - 2 Gew.-% der Verbindung der Formel I und 0,1-4 Gew.-% des Me(II)-Carboxylates und/oder Me(II)-Phenolates eingesetzt werden.

Solche Stabilisatorgemische sind weiterführend in der EP 90 770 beschrieben, woraus auch Beispiele und Bevorzugungen ersichtlich sind.

2-Thio-6-amino-uracile der Formel

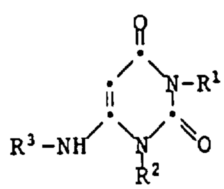

worin

$R^1$ und $R^2$ unabhängig voneinander ein Kohlenwasserstoffrest mit 1 bis 24 Kohlenstoffatomen ist, der durch -OH,

-$COOR^4$, -O(C=O)$R^4$, -(C=O)$R^4$, Halogen oder Amino substituiert sein kann, und $R^3$ H, Acyl mit 2 bis 24 Kohlenstoffatomen oder -(C=O)$NHR^4$ ist, wobei $R^4$ ein Kohlenwasserstoffrest mit 1 bis 24 Kohlenstoffatomen ist.
Weitere Ausführungsformen, Beispiele und Bevorzugungen sind aus der EP 41 479 erhältlich.

Aminouracile der Formel

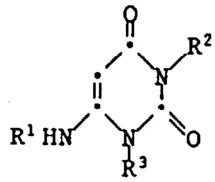

worin $R^1$ $C_1$-$C_8$-Alkyl, $C_5$-$C_8$-Cycloalkyl, Phenyl, Benzyl, $C_1$-$C_4$-Hydroxy alkyl, Hydroxyphenyl, $C_2$-$C_8$-Alkoxyalkyl, $C_2$-$C_8$-Alkylthioalkyl, $C_6$-$C_{10}$-Cycloalkoxyalkyl, $C_6$-$C_{10}$-Cycloalkylthioalkyl, $C_8$-$C_{14}$-Aralkoxyalkyl, $C_8$-$C_{14}$-Aralkylthioalkyl, $C_7$-$C_{14}$-Aryloxyalkyl, $C_7$-$C_{14}$-Arylthioalkyl, $C_2$-$C_{24}$-Alkylcarbonyl, $C_4$-$C_{26}$-Alkylcarbonylacetyl oder eine Gruppe -(C=X) $NHR^4$ ist, worin X Sauerstoff oder Schwefel und $R^4$ $C_1$-$C_8$-Alkyl bedeutet, $R^2$ und $R^3$ unabhängig voneinander $C_2$-$C_{21}$-Alkyl, $C_6$-$C_{12}$-Aryl oder $C_7$-$C_9$-Aralkyl bedeuten, wobei einer der beiden Reste $R^2$ un $R^3$ auch Wasserstoff sein kann, und, wenn $R^1$ Hydroxyphenyl oder Alkylcarbonylacetyl ist, $R^2$ und $R^3$ auch Methyl bedeuten können.
Diese Stabilisatoren werden in der EP 65 934 weiterführend beschrieben und Beispiele und Bevorzugungen stehen aus gleicher Literaturstelle zur Verfügung.

Weitere Stabilisatoren sind Triazole der Formel

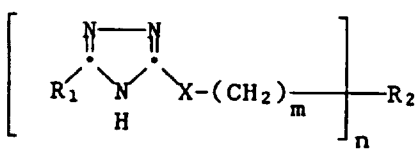

oder der Formel

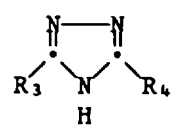

,

worin $R_1$ Wasserstoff, Hydroxy, $C_1$-$C_6$-Alkoxy, Carboxy, $C_2$-$C_6$-Alkoxycarbonyl, Merkapto, $C_1$-$C_6$-Alkylthio oder eine Gruppe -S-$CH_2$-COOH oder -S-$CH_2$-COO-Alkyl($C_1$-$C_6$) bedeutet, X Thio, Methylen oder die Gruppe -COO- oder -S-$CH_2$-COO-, jeweils durch das Estersauerstoffatom an das Alkyl gebunden, ist, m eine ganze Zahl von 1 bis 20 ist, n 1 oder 2 ist, $R_2$, falls einwertig, Wasserstoff, Hydroxy oder Merkapto bedeutet und, falls zweiwertig eine direkte Bindung, Imino, $C_1$-$C_6$-Alkylimino, Oxy, Thio oder Methylen ist, $R_3$ Wasserstoff, Amino, Merkapto oder $C_1$-$C_{12}$-Alkylthio ist und, falls $R_3$ Wasserstoff bedeutet, $R_4$ Wasserstoff, -$COOR_5$, worin $R_5$ Wasserstoff, $C_1$-$C_8$-Alkyl oder -$CH_2$-COO-Alkyl($C_1$-$C_8$) ist, oder -S-$R_6$, wobei $R_6$ Wasserstoff, $C_1$-$C_{12}$-Alkyl, -$CH_2$-COO-Alkyl($C_1$-$C_8$) oder $C_1$-$C_{12}$-Alkylthio ist oder

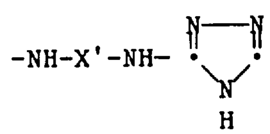

ist, worin X′ für die Gruppe -CO-NH-Alkylen-NH-CO-, -CO-Alkylen-S-Alkylen-CO mit jeweils 1-12 C-Atomen in der Alkylenkette oder für ($C_1$-$C_{12}$)-Alkylen steht, falls $R_3$ $NH_2$ ist, $R_4$ $C_1$-$C_4$-Alkyl, Merkapto, $C_1$-$C_4$-Alkylthio oder

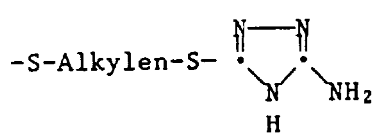

mit 1-12 C-Atomen in der Alkylenkette bedeutet, falls $R_3$ Merkapto ist, $R_4$ gegebenenfalls substituiertes Phenyl bedeutet, und falls $R_3$ $C_1$-$C_{12}$-Alkylthio ist, $R_4$ für $C_1$-$C_4$-Alkyl, $C_1$-$C_{12}$-Alkylthio oder für gegebenenfalls substituiertes Phenyl steht.

Solche Stabilisatoren, weitere Ausführungsformen , Beispiele und Bevorzugungen sind aus der DE 30 48 659 ersichtlich.

Stabilisatorgemische bestehend aus einem Thioäther der Formel

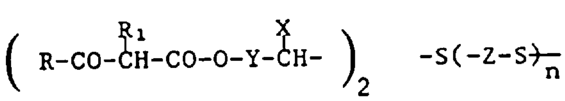

worin

n die Zahlen Null oder 1 bedeutet,
R $C_1$-$C_{18}$-Alkyl, $C_5$-$C_8$-Cycloalkyl, gegebenenfalls mit $C_1$-$C_4$-Alkyl substituiertes $C_6$-$C_{10}$-Aryl und
R Wasserstoff oder $C_1$-$C_4$-Alkyl sind,
$X^1$ als wiederholt vorkommendes Symbol gleich oder verschieden Wasserstoff oder eine Gruppe der Formel

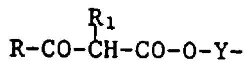

bedeutet,

Y als wiederholt vorkommendes Symbol gleich oder verschieden $C_1$-$C_6$-Alkylen oder eine Gruppe der Formel

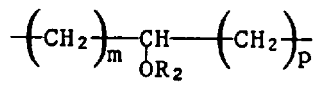

ist, wobei die $\{CH_2\}_m$ Gruppe an das Sauerstoffatom gebunden ist und worin $R_2$ Wasserstoff oder eine Gruppe der Formel

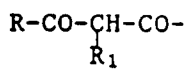

bedeutet, n die Zahlen 1 bis 4 und p die Zahlen Null bis 3 sein können, Z $C_1$-$C_6$-Alkylen oder eine Gruppe der Formel

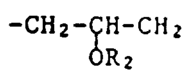

ist, und
b) einem ein Metall aus der Gruppe Zink, Calcium, Cadmium, Barium Magnesium oder Antimon oder ferner auch Zink kombiniert mit mindestens einem der vorgenannten Metalle enthaltenden Stabilisator.

Weitere Ausführungen dazu, Beispiele und Bevorzugungen sind der EP 19 576 zu entnehmen.

Verbindungen der Formel

A 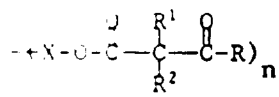

worin n die Zahlen 1 bis 3, R $C_1$-$C_{12}$-Alkyl oder Phenyl, $R^1$ und $R^2$ unabhängig voneinander Wasserstoff oder R und X gegebenenfalls durch -O- unterbrochenes $C_1$-$C_6$-Alkylen bedeuten und, wenn n 1 ist, A eine der Gruppen der Formeln

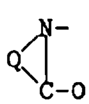 , 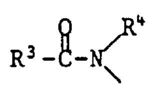 , 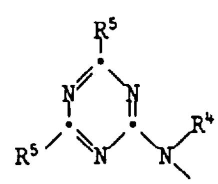

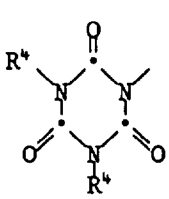 oder 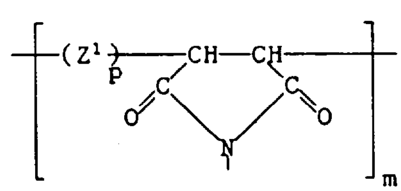

bedeutet, worin p Null oder 1 und m die Zahlen 1 bis 250 bedeuten, $Z^1$ gegebenenfalls mit $C_1$-$C_{24}$-Alkyl oder Alkoxy, $C_2$-$C_{24}$-Alkenyl, Phenyl, $C_2$-$C_{24}$-Carbalkoxy, Carbophenoxy, $C_2$-$C_{24}$-Alkanoyloxy, Benzoyloxy, Halogen oder Cyano substituiertes Aethylen, $R^3$ $C_1$-$C_{24}$-Alkyl, $R^4$ Wasserstoff, $C_1$-$C_{24}$-Alkyl, eine Gruppe -X-OH oder -X-OCO-$CH_2$-CO-R

und $R^5$ Wasserstoff, -OH, -$OR^3$, -$SR^3$, -$R^3$, -$NHR^3$ oder -X-OH sind, Q eine Gruppe Z-CO- ist, wobei die Carbonylgruppe an den Stickstoff der Formel II gebunden ist und Z Aethylen ist, das gegebenenfalls an ein 1,3-Homo- oder (Oxa-, Aza-) Heterodien addiert ist, welches seinerseits gegebenenfalls partiell, Bestandteil eine Homo- oder (Oxa-, Aza-) Heterocyclus mit 5 bis 40 Ringgliedern und 1 bis 10 Ringen sein kann oder ferner Z Vinylen, gegebenenfalls durch eine Gruppe -$CON(R^6)R^7$, -$COOR^8$ oder -$COSR^8$ substituiertes o-Phenylen oder die Gruppe -$CH_2$-S-$CH_2$- bedeutet, $R^6$ und $R^7$ gleich oder verschieden Wasserstoff oder $C_1$-$C_{12}$-Alkyl sind und $R^8$ $C_1$-$C_{12}$-Alkyl oder eine Gruppe -$CH_2$-$COOR^9$, worin $R^9$ $C_1$-$C_{12}$-Alkyl ist, bedeutet oder Q eine ringschliessende Gruppe, die zu einem 5-10 gliedrigen Heterocyclus mit mindestens 2 Heteroatomen führt, und, wenn n 2 ist, A eine der Gruppen der Formeln

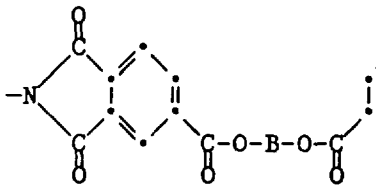 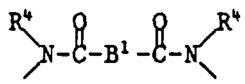, 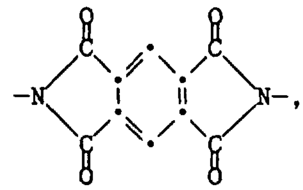,

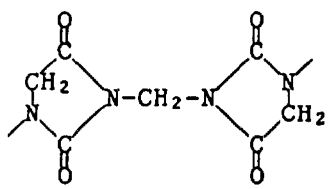, 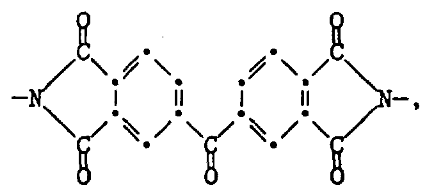, 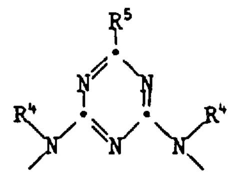,

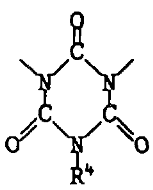 oder 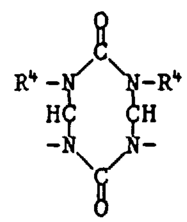

bedeutet, worin B $C_1$-$C_6$-Alkylen, p-Phenylen oder eine der Gruppen

$$-\left[(CH_2)_q-O\right]_r-(CH_2)_q- \quad \text{oder} \quad -\left[(CH_2)_q-S\right]_r-(CH_2)_q-$$

ist, worin q die Zahlen 1 bis 4 und r die Zahlen 1 bis 3 bedeuten, und $B^1$ eine direkte Bindung, B, $C_{10}$-$C_{14}$-Arylen oder $C_5$-$C_8$-Cycloalkylen bedeutet, und ferner, wenn n 3 ist, A eine Gruppe der Formel

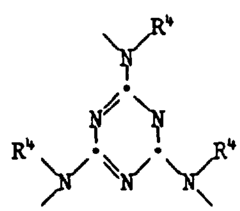

ist, worin $R^4$ die oben angegebene Bedeutung hat.

Weitere Ausführungen, Beispiele und Bevorzugungen stehen aus der EP 22 749 zur Verfügung.

Neben den genannten Stabilisatoren und Costabilisatoren nach dieser Erfindung können auch Epoxyverbindungen, wie 1,2-Epoxide und Oxirane, in Mengen von beispielsweise bis zu 10 Gew.-Teilen, bezogen auf 100 Gew.-Teile Zusammensetzung, zweckmässig bis zu 5 Gew.-Teilen und vorzugsweise von 0,01 bis zu 2 Gew.-Teilen, angewendet werden. Beispiele dafür sind epoxidiertes Polybutadien, epoxidiertes Sojablumenöl, epoxidiertes Leinsamenöl, epoxidiertes Fischöl, epoxidierter Talg, Methylbutyl- oder 2-Ethylhexylepoxystearat, Tris(epoxypropyl)isocyanurat, epoxidiertes Ricinusöl, epoxidiertes Sonnenblumenöl, 3-(2-Xenoxy)-1,2-epoxypropan, Bisphenol-A-polyglycidylether, Vinylcyclohexendiepoxyd, Dicyclopentadiendiepoxyd und 3,4-Epoxycyclohexylmethyl-3,4-epoxycyclohexancarboxylat.

Die erfindungsgemässen Zusammensetzungen können auf an sich bekannte Weise hergestellt werden. In der

Regel wird das Stabilisatorsystem in das Polymer eingearbeitet, wozu sich an sich bekannte Vorrichtungen, wie Kalander, Mischer, Kneter und dergleichen, anbieten.

Die nach vorliegender Erfindung stabilisierten Zusammensetzungen können auf bekannte Weisen in die gewünschte Form gebracht werden. Solche Verfahren sind beispielsweise Mahlen, Kalandrieren, Extrudieren, Spritzgiessen, Sintern oder Spinnen, ferner Extrusions-Blasen oder eine Verarbeitung nach dem Plastisol-Verfahren. Die Zusammensetzungen können auch zu Schaumstoffen verarbeitet werden.

Bevorzugte stabilisierte chlorhaltige Polymerzusammensetzungen sind nicht weichgemachte, resp. weichmacherfreie oder im wesentlichen weichmacherfreie Zusammensetzungen.

Die erfindungsgemässen Zusammensetzungen eignen sich insbesondere, in Form von Hart-Rezepturen, für Hohlkörper (Flaschen), Verpackungsfolien (Tiefziehfolien), Blasfolien, Crash pad-Folien (Automobile), Rohre, Schaumstoffe, Schwerprofile (Fensterrahmen), Lichtwandprofile, Bauprofile, Sidings, Fittings, Bürofolien und Apparatur-Gehäuse (Computer, Haushalteräte).

Andere Zusammensetzungen, in Form von Weich-Rezepturen sind für Drahtummantelungen, Kabelisolierungen, Dekorationsfolien, Dachfolien, Schaumstoffe, Agrarfolien, Schläuche, Dichtungsprofile, Bürofolien und Folien für Traglufthallen geeignet.

Beispiele für die Anwendung der erfindungsgemässen Zusammensetzungen als Plastisole sind Kunstleder, Fussböden, Textilbeschichtungen, Tapeten, Coil-Coatings und Unterbodenschutz für Kraftfahrzeuge.

Beispiele für Sinter-PVC-Anwendungen der erfindungsgemässen Zusammensetzungen sind Slush, Slush Mould und Coil-Coatings.

Bevorzugt wird die Verwendung der oben beschriebenen Polymerzusammensetzungen als Hartprofile für Aussenanwendungen und als Hartfolien. Weitere bevorzugte Verwendungen der oben beschriebenen Polymerzusammensetzungen sind "slush mold" oder "crash pads".

Die nachfolgenden Beispiele erläutern die Erfindung näher. Alle Angaben in Teilen und Prozenten beziehen sich auf das Gewicht, sofern nicht anders angegeben.

<u>Beispiele 1-6:</u> Verschiedene PVC-Zusammensetzungen werden durch Vermischen der einzelnen Komponenten gemäss nachfolgender Tabelle hergestellt (Mengenangaben in Gew.-Teilen).

Es handelt sich um Rezepturen für Hart-PVC-Profile für Aussenanwendungen. Die Zusammensetzungen 1-6 werden einem Hitzetest ausgesetzt, um die Stabilisatorwirkung im PVC zu prüfen.

Der Hitzetest wird derart ausgeführt, dass die PVC-Zusammensetzung bei 190°C auf einem Mischwalzwerk während 5 Minuten gewalzt wird. Vom gebildeten 0,3 mm dicken Walzfell werden Folienmuster in einem Testofen (®Mathis Thermotakter Typ LTF-ST) bei 190°C thermisch belastet. Nach den in nachfolgender Tabelle angegebenen Zeitintervallen wird jeweils an einem Prüfmuster der Yellowness-Index (YI) nach ASTM D 1925-70 bestimmt (hohe YI-Werte bedeuten starke Verfärbung und damit geringe Stabilität).

| Rezeptur \ Beispiel | 1 | 2 | 3 | 4 | 5 | 6 |
|---|---|---|---|---|---|---|
| acrylatmodifiziertes S-PVC, K-Wert 67 | 100 | 100 | 100 | 100 | 100 | 100 |
| Titandioxid Pigment | 4 | 4 | 4 | 4 | 4 | 4 |
| Kreide | 6 | 6 | 6 | 6 | 6 | 6 |
| polymethylmetacrylathaltige Verarbeitungshilfe | 1 | 1 | 1 | 1 | 1 | 1 |
| Distearylphthalat (inneres Gleitmittel) | 0,5 | 0,5 | 0,5 | 0,5 | 0,5 | 0,5 |
| 12-Hydroxystearinsäure (äusseres Gleitmittel) | 0,2 | 0,2 | 0,2 | 0,2 | 0,2 | 0,2 |
| Bisphenol A | 0,2 | 0,2 | 0,2 | 0,2 | 0,2 | 0,2 |
| Ca-stearat | 0,8 | 0,8 | 0,8 | 0,8 | 0,8 | 0,8 |
| Zn-stearat | 1,0 | 1,0 | 1,0 | 1,0 | 1,0 | 1,0 |
| Hydrotalcit ($ZnO \cdot 3MgO \cdot Al_2O_3 \cdot CO_2 \cdot 8\text{-}9H_2O$) | 1,0 | 1,0 | 1,0 | 1,0 | 1,0 | 1,0 |
| Dibenzoylmethan | - | 0,5 | - | 0,5 | - | 0,5 |
| sterisch gehindertes Amin (1)* | 0,3 | 0,3 | - | - | - | - |
| sterisch gehindertes Amin (2)* | - | - | 0,3 | 0,3 | - | - |
| sterisch gehindertes Amin (3)* | - | - | - | - | 0,3 | 0,3 |

Mathis-Thermotakter-Test bei 1[illegible]0°C: YI

| Min. \ Beispiel | 1 | 2 | 3 | 4 | 5 | 6 |
|---|---|---|---|---|---|---|
| 0 | 23,4 | 7,5 | 21,7 | 6,9 | 21,6 | 6,8 |
| 5 | 43,3 | 20,2 | 44,9 | 18,2 | 37,0 | 10,3 |
| 15 | 45,3 | 24,1 | 47,8 | 23,9 | 39,8 | 11,8 |
| 25 | 48,5 | 30,3 | 55,9 | 35,6 | 42,4 | 14,6 |
| 35 | 57,2 | 44,9 | 36,9 | 51,9 | 46,6 | 19,5 |
| 45 | 54,6 | 57,3 | 50,8 | 55,0 | 55,2 | 28,5 |
| 55 | 50,2 | 57,3 | 52,3 | 49,7 | 54,6 | 45,4 |
| 65 | 52,1 | 54,0 | 54,3 | 53,2 | 50,1 | 56,1 |
| 75 | 55,7 | 54,5 | - | 55,8 | 52,3 | 53,0 |
| 85 | - | 57,0 | - | - | 56,3 | 53,1 |
| 95 | - | - | - | - | - | 54,7 |

Beispiele 7-9: PVC-Zusammensetzungen werden durch Vermischen der einzelnen Komponenten nach untenstehender Tabelle hergestellt (Mengenangaben in Gew.-Teilen). Es handelt sich um Rezepturen für Hart-PVC-Folien. Die

Mischungen nach Beispielen 7 bis 9 werden auf einem Mischwalzwerk 5 Minuten bei 180°C gewalzt. Vom gebildeten 0,3 mm dicken Walzfell werden Folienmuster in einem Testofen (®Mathis Thermotakter Typ LTF-ST) bei 190°C thermisch belastet. Nach den in nachfolgender Tabelle angegebenen Zeitintervallen wird jeweils an einem Prüfmuster der Yellowness-Index (YI) nach ASTM D 1925-70 bestimmt (hohe YI-Werte bedeuten starke Verfärbung und damit geringe Stabilität).

| Rezeptur \ Beispiel | 7 | 8 | 9 |
|---|---|---|---|
| S-PVC, K-Wert 57 | 100 | 100 | 100 |
| "impact modifier" auf Basis von Methylbutadienstyrol | 2,5 | 2,5 | 2,5 |
| polymetylmetacrylathaltige Verarbeitungshilfe | 1,5 | 1,5 | 1,5 |
| Glycerylhydroxystearat | 0,5 | 0,5 | 0,5 |
| Ca-stearat | ,75 | ,75 | ,75 |
| Zn-stearat | ,75 | ,75 | ,75 |
| Stearoylbenzoylmethan | 0,3 | 0,3 | 0,3 |
| Hydrotalcit ($ZnO\cdot 3MgO\cdot Al_2O_3\cdot CO_2\cdot 8\text{-}9\ H_2O$) | 0,6 | 0,6 | 0,6 |
| sterisch gehindertes Amin (1)* | 0,3 | - | - |
| sterisch gehindertes Amin (2)* | - | 0,3 | - |
| sterisch gehindertes Amin (3)* | - | - | 0,3 |

Mathis-Thermotakter-Test bei 190°C: YI

| Min. \ Beispiel | 7 | 8 | 9 |
|---|---|---|---|
| 0 | 10,4 | 10,8 | 10,3 |
| 5 | 35,0 | 27,7 | 24,1 |
| 12,5 | 44,1 | 38,2 | 26,3 |
| 20,0 | 68,0 | 71,9 | 38,4 |
| 27,5 | 90,8 | 117 | 77,3 |
| 35,0 | 125 | - | 98,2 |
| 42,5 | - | - | 115 |

*) Die in den Beispielen 1 bis 9 erwähnten sterisch gehinderten Amine haben, entsprechend der jeweiligen Bezugsnunummer, die nachfolgende Bedeutung:

①

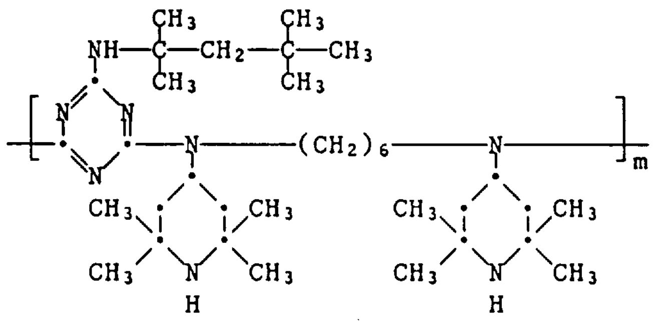

m = 2-200

②

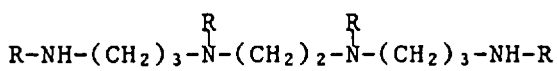

R =

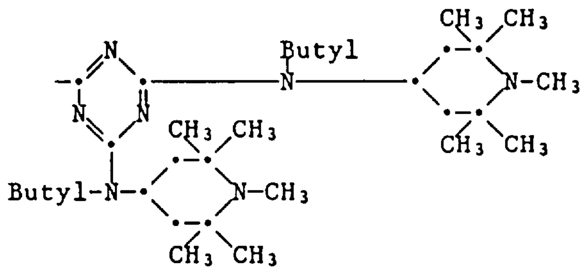

③

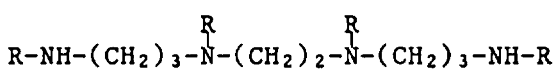

R =

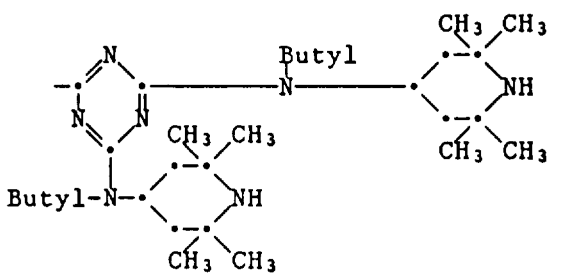

Die sterisch gehinderten Amine mit den Formeln ① bis ③ stellen gleichzeitig auch bevorzugte Verbindungen dar.

## Patentansprüche

1. Stabilisierte chlorhaltige Polymerzusammensetzung, enthaltend ein chlorhaltiges Polymer und ein Stabilisatorgemisch, enthaltend:

   a) mindestens ein cyclisches oder nicht cyclisches sterisch gehindertes Amin, wobei in weichmacherhaltigen

Polymerzusammensetzungen die Verbindung der Formel

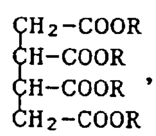, mit R = 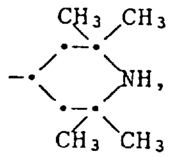,

ausgeschlossen ist,

b) mindestens eine organische Zinkverbindung und/oder anorganische Zinkverbindung der Reihe der Carbonate, Chloride, Sulfate, Oxide, Hydroxide, der basischen Oxide und Mischoxide, und

c) mindestens ein Verbindung aus der Reihe der Hydrotalcite ausgenommen eine Zusammensetzung, welche ein Bariumphenolat enthält.

**2.** Polymerzusammensetzung nach Anspruch 1, enthaltend

d) mindestens ein 1,3-Diketon.

**3.** Polymerzusammensetzung nach Anspruch 1, enthaltend

e) mindestens eine organische oder anorganische Calcium-Verbindung.

**4.** Polymerzusammensetzung nach Anspruch 1, enthaltend als a) mindestens ein cyclisches sterisch gehindertes Amin, insbesondere eine Verbindung aus der Reihe der Derivate von Polyalkylpiperidinen, die mindestens eine Gruppe der Formel III,

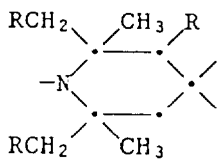

(III)

worin R Wasserstoff oder Methyl ist, enthält.

**5.** Polymerzusammensetzung nach Anspruch 4, worin der Polyalkylpiperidinrest der Formel III in 4-Stellung mit einem oder 2 polaren Substituenten oder einem polaren Spiro-Ringsystem substituiert ist.

**6.** Polymerzusammensetzung nach Anspruch 1, enthaltend als b) mindestens eine organische Zinkverbindung aus der Reihe der aliphatischen gesättigten $C_2$-$C_{22}$-Carboxylate, der aliphatischen olefinischen $C_3$-$C_{22}$-carboxylate, der aliphatischen $C_2$-$C_{22}$-Carboxylate, die mit wenigstens einer OH-Gruppe substituiert sind, der cyclischen und bicyclischen Carboxylate mit 5-22 C-Atomen, der aromatischen $C_7$-$C_{22}$-Carboxylate, der mit wenigstens einer OH-Gruppe substituierten aromatischen $C_7$-$C_{22}$-Carboxylate, der $C_1$-$C_{16}$-alkylsubstituierten Phenylcarboxylate, der Phenyl-$C_1$-$C_{16}$-alkylcarboxylate, der $C_6$-$C_{18}$-Phenolate, der $C_5$-$C_{26}$-Chelate von 1,3-Diketonen oder β-Ketocarbonsäureestern oder Dehydracetsäurederivaten sowie der Mercaptide auf der Basis von Mercaptocarbonsäureestern und der Glycinate.

**7.** Polymerzusammensetzung nach Anspruch 1, enthaltend als c) mindestens eine Verbindung aus der Reie der Hydrotalcite der allgemeinen Formel I

$$M^{2+}{}_{1-x} \cdot M^{3+}{}_{x} \cdot (OH)_2 \cdot (A^{n-})_{x/n} \cdot mH_2O \qquad (I),$$

wobei

$M^{2+}$ = Mg, Ca, Sr, Ba, Zn, Cd, Pb, Sn und/oder Ni ist,
$M^{3+}$ = Al, B oder Bi ist,
$A^n$ ein Anion mit der Valenz n darstellt,
n eine Zahl von 1-4 ist,
x eine Zahl von 0-0,5 ist,

m eine Zahl von 0-2 ist und

A $= OH^-$, $Cl^-$, $Br^-$, $I^-$, $ClO_4^-$, $HCO_3^-$, $CH_3COO^-$, $C_6H_5COO^-$, $CO_3^{2-}$, $SO_4^{2-}$,

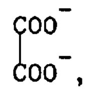

$(CHOHCOO)_2^{2-}$, $(CHOH)_4CH_2OHCOO^-$, $C_2H_4(COO)_2^{2-}$, $(CH_2COO)_2^{2-}$, $CH_3CHOHCOO^-$, $SiO_3^{2-}$, $SiO_4^{4-}$, $Fe(CN)_6^{3-}$, $Fe(CN)_6^{4-}$ oder $HPO_4^{2-}$ darstellt.

**8.** Polymerzusammensetzung gemäss Anspruch 2, enthaltend als d) mindestens ein 1,3-Diketon der allgemeinen Formel II oder IIa,

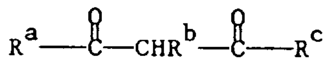 (II)

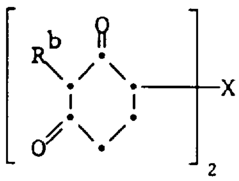 (IIa)

wobei

$R^a$ Alkyl mit 1 bis 22 C-Atomen, $C_5$-$C_{10}$-Hydroxyalkyl, Alkenyl mit 2 bis 22 C-Atomen, Phenyl, mit -OH, $C_1$-$C_4$-Alkyl, $C_1$- bis $C_4$-Alkoxy oder Halogen substituiertes Phenyl, Phenyl-$C_1$-$C_4$-alkyl, eine Gruppe der Formel

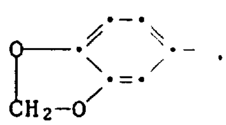

Cycloalkyl mit 5 bis 12 Ring-C-Atomen, oder mit 1 bis 3 $C_1$-$C_4$-Alkylgruppen substituiertes Cycloalkyl mit 5 bis 12 Ring-C-Atomen bedeutet.

$R^c$ Alkyl mit 1 bis 22 C-Atomen, $C_5$-$C_{10}$-Hydroxyalkyl, Alkenyl mit 2 bis 22 C-Atomen, Phenyl, mit -OH, $C_1$-$C_4$-Alkyl, $C_1$- bis $C_4$-Alkoxy oder Halogen, substituiertes Phenyl oder Phenyl-$C_1$-$C_4$-alkyl, eine Gruppe der Formel

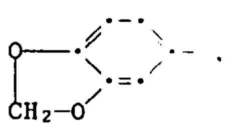

Cycloalkyl mit 5 bis 12 Ring-C-Atomen, oder mit 1 bis 3 $C_1$ bis $C_4$-Alkylgruppen substituiertes Cycloalkyl mit 5 bis 12 Ring-C-Atomen bedeutet,

$R^b$ -H, Alkyl mit 1 bis 18 C-Atomen, Alkenyl mit 2 bis 12 C-Atomen, Phenyl, $C_1$-$C_4$-Alkyl substituiertes Phenyl, Phenyl-$C_1$-$C_4$-alkyl, oder eine Gruppe der Formel

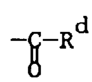

bedeutet,

wobei $R^d$ $-CH_3$, $-C_2H_5$ oder Phenyl darstellt oder worin $R^a$ und $R^b$ zusammen die Bedeutung eines Tetramethylenrestes oder eines Tetramethylenrestes, der mit einem Benzorest anelliert ist, aufweisen, und X Alkylen mit 1 bis 4 C-Atomen bedeutet.

**9.** Polymerzusammensetzung gemäss Anspruch 2, enthaltend als d) mindestens ein 1,3-Diketon der allgemeinen Formel IIb

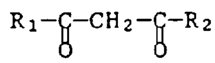 (IIb),

worin $R_1$ $C_1$-$C_{10}$-Alkyl, $C_5$-$C_{10}$-Hydroxyalkyl, Phenyl, Hydroxyphenyl, $C_7$-$C_{10}$-Phenylalkyl oder am Phenylring durch eine OH-Gruppe substituiertes $C_7$-$C_{10}$-Phenylalkyl ist und $R_2$ $C_5$-$C_{10}$-Hydroxyalkyl, Hydroxyphenyl oder am Phenylring durch eine OH-Gruppe substituiertes $C_7$-$C_{10}$-Phenylalkyl darstellt, mit der Bedingung, dass $R_2$ verschieden von Hydroxyphenyl ist, wenn R1 Phenyl oder Hydroxyphenyl bedeutet.

**10.** Polymerzusammensetzung nach Anspruch 3, enthaltend als e) mindestens eine Ca-Seife der allgemeinen Formel $Ca(OOCR^x)_2$, wobei $R^x$ eine Alkylgruppe mit 1 bis 22 C-Atomen oder eine Alkenylgruppe mit 2 bis 22 C-Atomen, Phenyl, Phenyl-$C_1$-$C_4$-alkyl oder $C_1$-$C_8$-Alkylphenyl darstellt.

**11.** Polymerzusammensetzung nach Anspruch 4, enthaltend als Derivat von Polyalkylpiperidinen eine Verbindung der Formel VIII

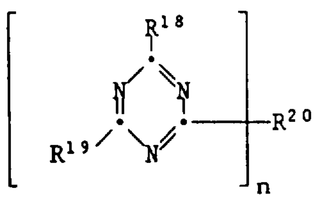 (VIII),

worin n die Zahl 1 oder 2 ist und $R^{18}$ eine Gruppe der Formel

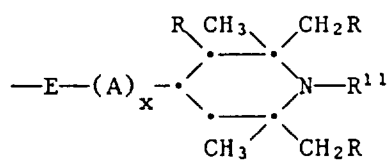

bedeutet, worin R Wasserstoff oder Methyl bedeutet und $R^{11}$ Wasserstoff, Oxyl, Hydroxyl, $C_1$-$C_{12}$-Alkyl, $C_3$-$C_8$-Alkenyl, $C_3$-$C_8$-Alkinyl, $C_7$-$C_{12}$-Aralkyl, $C_1$-$C_{18}$-Alkoxy, $C_5$-$C_8$-Cycloalkoxy, $C_7$-$C_9$-Phenylalkoxy, $C_3$-$C_8$-Alkanoyl, $C_3$-$C_5$-Alkenoyl, $C_1$-$C_{18}$-Alkanoyloxy, Benzyloxy, Glycidyl oder eine Gruppe $-CH_2CH(OH)$-Z, worin Z Wasserstoff, Methyl oder Phenyl ist, bedeutet, E -O- oder $-NR^{11}$- ist, A $C_2$-$C_6$-Alkylen oder $-(CH_2)_3$-O- und x die Zahlen O oder 1 bedeuten, $R^{19}$ gleich $R^{18}$ oder eine der Gruppen $-NR^{21}R^{22}$, $-OR^{23}$, $-NHCH_2OR^{23}$ oder $-N(CH_2OR^{23})_2$ ist, $R^{20}$, wenn n = 1 ist, gleich $R^{18}$ oder $R^{19}$, und wenn n = 2 ist, eine Gruppe -E-B-E- ist, worin B gegebenenfalls durch -N($R^{21}$)- unterbrochenes $C_2$-$C_6$-Alkylen bedeutet, $R^{11}$ $C_1$-$C_{12}$-Alkyl, Cyclohexyl, Benzyl oder $C_1$-$C_4$-Hydroxyalkyl oder eine Gruppe der Formel

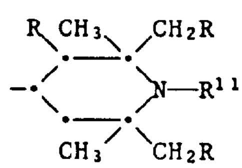

ist, $R^{22}$ $C_1$-$C_{12}$ Alkyl, Cyclohexyl, Benzyl, $C_1$-$C_4$ Hydroxyalkyl und $R^{23}$ Wasserstoff, $C_1$-$C_{12}$ Alkyl oder Phenyl bedeuten oder $R^{21}$ und $R^{22}$ zusammen $C_4$-$C_5$-Alkylen oder -Oxaalkylen, beispielsweise

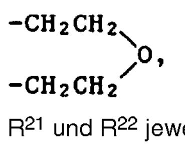 oder eine Gruppe der Formel 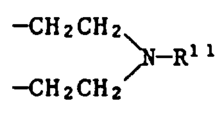

sind oder auch $R^{21}$ und $R^{22}$ jeweils eine Gruppe der Formel

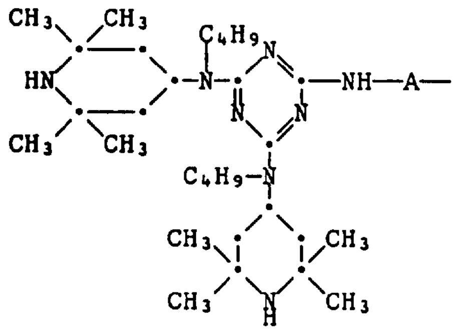

bedeuten.

**12.** Polymerzusammensetzung nach Anspruch 11, enthaltend eine der Verbindungen der Formel

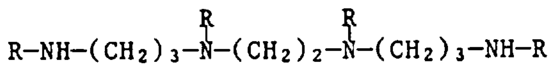

mit R =

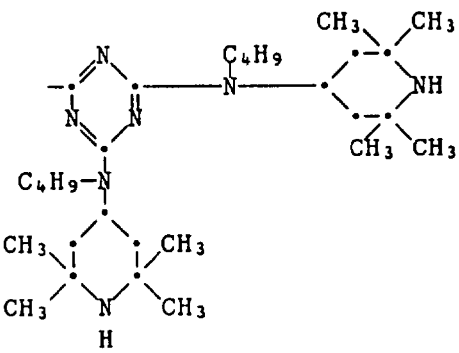

oder

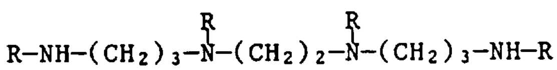

mit R =

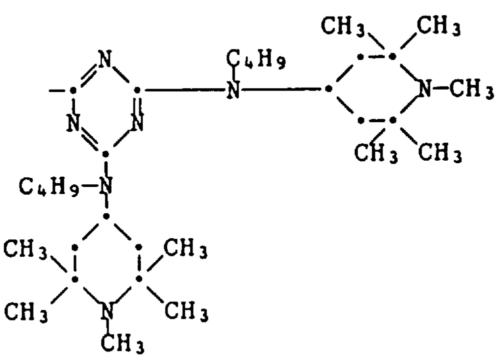

**13.** Polymerzusammensetzung nach Anspruch 4, enthaltend eine Verbindung der Formel

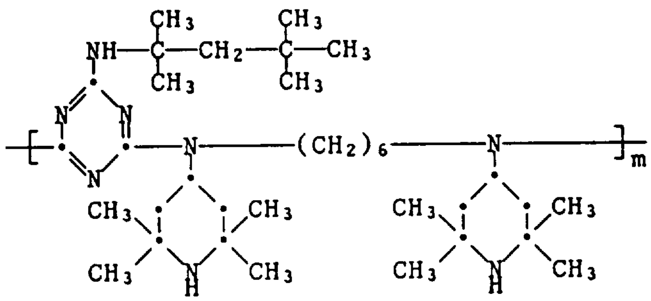 ,

wobei m eine Zahl von 2 bis 200 bedeutet.

**14.** Polymerzusammensetzung nach Anspruch 6, enthaltend als b) eine organische Zinkverbindung, wobei die organische Zinkverbindung ein Salz einer Carbonsäure mit 7 bis 20 C-Atomen oder ein $C_7$-$C_{20}$-Alkylphenolat darstellt.

**15.** Polymerzusammensetzung nach Anspruch 7, enthaltend als c) mindestens eine Verbindung aus der Reihe der Hydrotalcite der allgemeinen Formel I

$$M^{2+}{}_{1-x}\cdot Al_x\cdot (OH)_2\cdot (A^{n-})_{x/2}\cdot mH_2O, \quad (I),$$

wobei $M^{2+}$ die Bedeutung von Mg oder einer festen Lösung von Mg und Zn hat,
$A^{n-}$ für $CO_3{}^{2-}$ steht, x eine Zahl von 0 bis 0,5 ist und m eine Zahl von 0 bis 2 ist.

**16.** Polymerzusammensetzung nach Anspruch 15, enthaltend mindestens eine der Verbindungen der Formeln

$$4MgO\cdot Al_2O_3\cdot CO_2\cdot 9H_2O,$$

$$4MgO\cdot Al_2O_3\cdot CO_2\cdot 6H_2O,$$

$$ZnO\cdot 3MgO\cdot Al_2O_3\cdot CO_2\cdot 8\text{-}9H_2O$$

oder

$$ZnO\cdot 3MgO\cdot Al_2O_3\cdot CO_2\cdot 5\text{-}6H_2O.$$

**17.** Polymerzusammensetzung nach Anspruch 1, enthaltend, bezogen auf die Zusammensetzung,

a) 0,01 bis 1,5 Gew.-Teile an cyclischen oder nicht cyclischen sterisch gehinderten Aminen,

b) 0,01 bis 2 Gew.-Teile an organischer oder anorganischer Zinkverbindung,
und

c) 0,1 bis 3 Gew.-Teile an Verbindungen aus der Reihe der Hydrotalcite.

**18.** Polymerzusammensetzung nach Anspruch 1, enthaltend

d) 0,05 - 5 Gew.-Teile eines 1,3-Diketons.

**19.** Polymerzusammensetzung nach Anspruch 1, enthaltend

e) 0,05 - 5 Gew.-Teile einer organischen oder anorganischen Calcium-Verbindung.

**20.** Polymerzusammensetzung nach Anspruch 1, worin das Polymer Polyvinylchlorid ist oder dieses enthält.

## Claims

**1.** A stabilized chlorine-containing polymer composition containing a chlorine-containing polymer and a stabilizer mixture comprising:

a) at least one cyclic or acyclic sterically hindered amine, with the exception of the compound of the formula

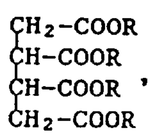 , where R is 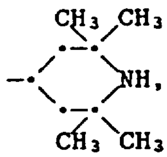

in plasticizer-containing polymer compositions,
b) at least one organic zinc compound and/or inorganic zinc compound from the series of carbonates, chlorides, sulfates, oxides, hydroxides, basic oxides and mixed oxides, and
c) at least one compound from the series of hydrotalcites, with the exception of a composition which comprises a barium phenolate.

**2.** A polymer composition according to claim 1, containing

d) at least one 1,3-diketone.

**3.** A polymer composition according to claim 1, containing

e) at least one organic or inorganic calcium compound.

**4.** A polymer composition according to claim 1, containing as a) at least one cyclic sterically hindered amine, in particular a compound from the series of derivatives of polyalkylpiperidines containing at least one group of the formula III

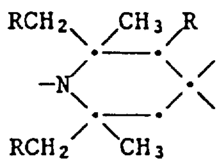 (III)

in which R is hydrogen or methyl.

**5.** A polymer composition according to claim 4, in which the polyalkylpiperidine radical of the formula III is substituted in the 4-position by one or 2 polar substituents or a polar spiro ring system.

**6.** A polymer composition according to claim 1, containing as b) at least one organic zinc compound from the series of aliphatic saturated $C_2$-$C_{22}$ carboxylates, aliphatic olefinic $C_3$-$C_{22}$ carboxylates, aliphatic $C_2$-$C_{22}$ carboxylates which are substituted by at least one OH group, cyclic and bicyclic carboxylates having 5-22 C atoms, aromatic $C_7$-$C_{22}$ carboxylates, aromatic $C_7$-$C_{22}$ carboxylates which are substituted by at least one OH group, C2-C16alkyl-substituted phenylcarboxylates, phenyl-$C_1$-$C_{16}$alkylcarboxylates, $C_6$-$C_{18}$phenolates, $C_5$-$C_{26}$ chelates of 1,3-diketones or β-ketocarboxylic esters or dehydroacetic acid derivatives and mercaptides based on mercaptocarboxylic esters and glycinates.

**7.** A polymer composition according to claim 1, containing as c) at least one compound from the series of hydrotalcites of the general formula (I)

$$M^{2+}_{1-x}\cdot M^{3+}_{x}\cdot(OH)_2\cdot(A^{n-})_{x/n}\cdot mH_2O \qquad (I),$$

in which

$M^{2+}$ is Mg, Ca, Sr, Ba, Zn, Cd, Pb, Sn and/or Ni,
$M^{3+}$ is Al, B or Bi,
$A^n$ is an n-valent anion,
n is a number from 1-4,
x is a number from 0-0.5,
m is a number from 0-2, and

A is $OH^-$, $Cl^-$, $Br^-$, $I^-$, $ClO_4^-$, $HCO_3^-$, $CH_3COO^-$, $C_6H_5COO^-$, $CO_3^{2-}$, $SO_4^{2-}$,

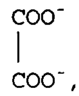

$(CHOHCOO)_2^{2-}$, $(CHOH)_4CH_2OHCOO^-$, $C_2H_4(COO)_2^{2-}$, $(CH_2COO)_2^{2-}$, $CH_3CHOHCOO^-$, $SiO_3^{2-}$, $SiO_4^{4-}$, $Fe(CN)_6^{3-}$, $Fe(CN)_6^{4-}$ or $HPO_4^{2-}$.

**8.** A polymer composition according to claim 2, containing as d) at least one 1,3-diketone of the general formula II or IIa

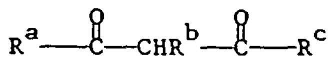 (II)

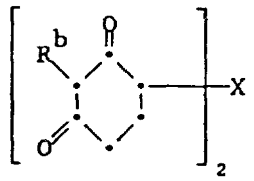 (IIa)

in which
$R^a$ is alkyl of 1 to 22 C atoms, $C_5$-$C_{10}$hydroxyalkyl, alkenyl of 2 to 22 C atoms, phenyl, phenyl substituted by -OH, $C_1$-$C_4$alkyl, $C_1$- to $C_4$alkoxy or halogen, phenyl-$C_1$-$C_4$alkyl, a group of the formula

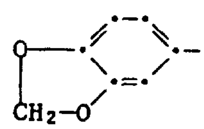 ,

cycloalkyl of 5 to 12 ring C atoms, or cycloalkyl of 5 to 12 ring C atoms substituted by 1 to 3 $C_1$-$C_4$alkyl groups,
$R^c$ is alkyl of 1 to 22 C atoms, $C_5$-$C_{10}$hydroxyalkyl, alkenyl of 2 to 22 C atoms, phenyl, phenyl substituted by -OH, $C_1$-$C_4$alkyl, $C_1$- to $C_4$alkoxy or halogen, or phenyl-$C_1$-$C_4$alkyl, a group of the formula

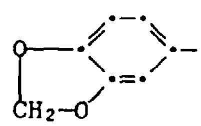 ,

cycloalkyl of 5 to 12 ring C atoms, or cycloalkyl of 5 to 12 ring C atoms substituted by 1 to 3 $C_1$- to $C_4$alkyl groups,
$R^b$ is -H, alkyl of 1 to 18 C atoms, alkenyl of 2 to 12 C atoms, phenyl, phenyl substituted by $C_1$-$C_4$alkyl, phenyl-$C_1$-$C_4$alkyl, or a group of the formula

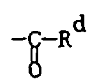

in which $R^d$ is $-CH_3$, $-C_2H_5$ or phenyl, or in which
$R^a$ and $R^b$ together are a tetramethylene radical or a tetramethylene radical fused with a benzo radical,
and x is alkylene of 1 to 4 C atoms.

**9.** A polymer composition according to claim 2, containing as d) at least one 1,3-diketone of the general formula IIb

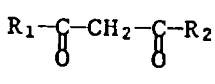 (IIb),

in which $R_1$ is $C_1$-$C_{10}$alkyl, $C_5$-$C_{10}$hydroxyalkyl, phenyl, hydroxyphenyl, $C_7$-$C_{10}$phenylalkyl or $C_7$-$C_{10}$phenylalkyl substituted on the phenyl ring by an OH group and $R_2$ is $C_5$-$C_{10}$hydroxyalkyl, hydroxyphenyl or $C_7$-$C_{10}$phenylalkyl substituted on the phenyl ring by an OH group, under the condition that $R_2$ is other than hydroxyphenyl if $R_1$ is phenyl or hydroxyphenyl.

**10.** A polymer composition according to claim 3, containing as e) at least one Ca soap of the general formula Ca-(-$OOCR^x)_2$ in which $R^x$ is an alkyl group of 1 to 22 C atoms or an alkenyl group of 2 to 22 C atoms, phenyl, phenyl-

$C_1$-$C_4$alkyl or $C_1$-$C_8$alkylphenyl.

**11.** A polymer composition according to claim 4, containing as derivative of polyalkylpiperidines a compound of the formula VIII

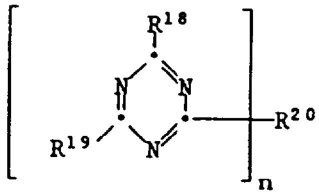

(VIII),

in which n is the number 1 or 2 and $R^{18}$ is a group of the formula

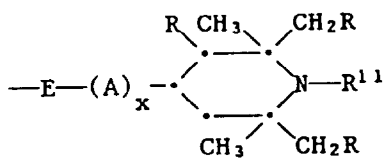

in which R is hydrogen or methyl and $R^{11}$ is hydrogen, oxyl, hydroxyl, $C_1$-$C_{12}$alkyl, $C_3$-$C_8$alkenyl, $C_3$-$C_8$alkynyl, $C_7$-$C_{12}$aralkyl, $C_1$-$C_{18}$alkoxy, $C_5$-$C_8$cycloalkoxy, $C_7$-$C_9$phenylalkoxy, $C_3$-$C_8$alkanoyl, $C_3$-$C_5$alkenoyl, $C_1$-$C_{18}$alkanoyloxy, benzyloxy, glycidyl or a group $-CH_2CH(OH)-Z$, in which Z is hydrogen, methyl or phenyl, E is -O- or $-NR^{11}-$, A is $C_2$-$C_6$alkylene or $-(CH_2)_3-O-$ and x is the number 0 or 1, $R^{19}$ is identical to $R^{18}$ or is one of the groups $-NR^{21}R^{22}$, $-OR^{23}$, $-NHCH_2OR^{23}$ or $-N(CH_2OR^{23})_2$, $R^{20}$ is, if n is 1, identical to $R^{18}$ or $R^{19}$, and, if n is 2, a group -E-B-E-, in which B is $C_2$-$C_6$alkylene which may be interrupted by $-N(R^{21})-$, $R^{11}$ is $C_1$-$C_{12}$alkyl, cyclohexyl, benzyl or $C_1$-$C_4$hydroxyalkyl or a group of the formula

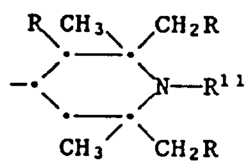

$R^{22}$ is $C_1$-$C_{12}$alkyl, cyclohexyl, benzyl, $C_1$-$C_4$hydroxyalkyl and $R^{23}$ is hydrogen, $C_1$-$C_{12}$alkyl or phenyl or $R^{21}$ and $R^{22}$ together are $C_4$-$C_5$alkylene or -oxaalkylene, for example

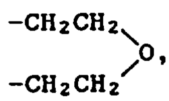

, or a group of the formula

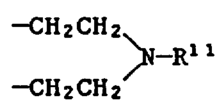

or else $R^{21}$ and $R^{22}$ are each a group of the formula

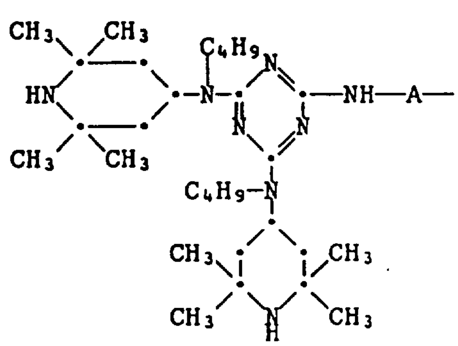

**12.** A polymer composition according to claim 11, comprising one of the compounds of the formula

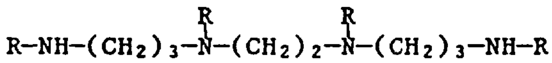

where R is

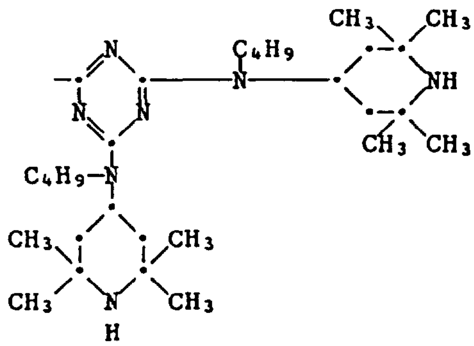

or

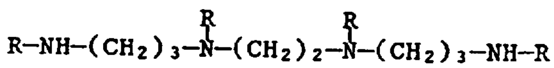

where R is

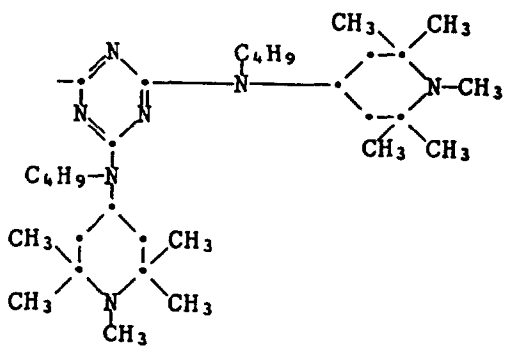

**13.** A polymer composition according to claim 4, comprising a compound of the formula

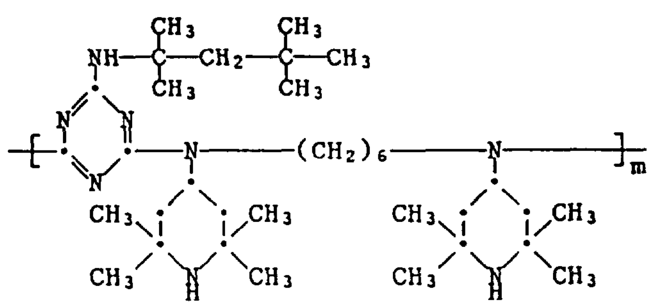

,

in which m is a number from 2 to 200.

**14.** A polymer composition according to claim 6, containing as b) an organic zinc compound, the organic zinc compound being a salt of a carboxylic acid of 7 to 20 C atoms or a $C_7$-$C_{20}$alkylphenolate.

**15.** A polymer composition according to claim 7, containing as c) at least one compound from the series of hydrotalcites of the general formula I

$$M^{2+}_{1-x}\cdot Al_x\cdot (OH)_2\cdot (A^{n-})_{x/2}\cdot mH_2O, \quad (I),$$

in which $M^{2+}$ is Mg or a solid solution of Mg and Zn, $A^{n-}$ is $CO_3^{2-}$, x is a number from 0 to 0.5 and m is a number from 0 to 2.

**16.** A polymer composition according to claim 15, containing at least one .of the compounds of the formulae

$$4MgO\cdot Al_2O_3\cdot CO_2\cdot 9H_2O,$$

$$4MgO\cdot Al_2O_3\cdot CO_2\cdot 6H_2O,$$

$$ZnO\cdot 3MgO\cdot Al_2O_3\cdot CO_2\cdot 8\text{-}9H_2O$$

or

$$ZnO\cdot 3MgO\cdot Al_2O_3\cdot CO_2\cdot 5\text{-}6H_2O.$$

**17.** A polymer composition according to claim 1, containing, relative to the composition,

a) 0.01 to 1.5 parts by weight of cyclic or acyclic sterically hindered amines,

b) 0.01 to 2 parts by weight of organic or inorganic zinc compound,
and

c) 0.1 to 3 parts by weight of compounds from the series of hydrotalcites.

**18.** A polymer composition according to claim 1, containing

d) 0.05-5 parts by weight of a 1,3-diketone.

**19.** A polymer composition according to claim 1, containing

e) 0.05-5 parts by weight of an organic or inoranic calcium compound.

**20.** A polymer composition according to claim 1, in which the polymer is polyvinyl chloride or comprises polyvinyl chloride.

**Revendications**

**1.** Composition de polymère chloré stabilisée, contenant un polymère chloré et un mélange de stabilisants qui contient

a) au moins une amine cyclique ou non cyclique à encombrement stérique, le composé de formule

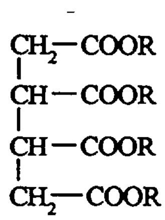

avec R =

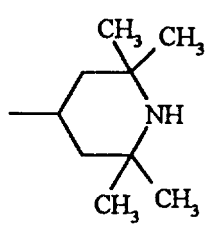

étant exclu dans les compositions de polymères contenant un plastifiant,
b) au moins un composé organique du zinc et/ou un composé inorganique du zinc de la série des carbonates, des chlorures, des sulfates, des oxydes, des hydroxydes, des oxydes basiques et des oxydes mixtes, et
c) au moins un composé de la série des hydrotalcites,
à l'exception des compositions contenant un phénolate de baryum.

**2.** Composition de polymère selon la revendication 1, contenant

d) au moins une 1,3-dicétone.

**3.** Composition de polymère selon la revendication 1, contenant

e) au moins un composé organique ou inorganique du calcium.

**4.** Composition de polymère selon la revendication 1, contenant comme constituant a) au moins une amine cyclique à encombrement stérique, en particulier un composé de la série des dérivés de polyalkylpipéridines qui contient au moins un groupe de formule III

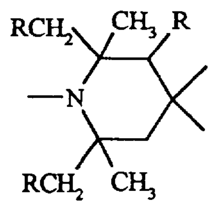

(III)

dans laquelle R représente un atome d'hydrogène ou un groupe méthyle.

**5.** Composition de polymère selon la revendication 4, dans laquelle le reste polyalkylpipéridine de formule III est substitué en position 4 par un ou deux substituants polaires ou par un système cyclique polaire condensé en spiro.

**6.** Composition de polymère selon la revendication 1, contenant comme constituant b) au moins un composé organique du zinc de la série des carboxylates aliphatiques saturés en $C_2$-$C_{22}$, des carboxylates aliphatiques oléfiniques en $C_3$-$C_{22}$, des carboxylates aliphatiques en $C_2$-$C_{22}$ substitués par au moins un groupe OH, des carboxylates cycliques et bicycliques de 5 à 22 atomes de carbone, des carboxylates aromatiques en $C_7$-$C_{22}$, des carboxylates aromatiques en $C_7$-$C_{22}$ substitués par au moins un groupe OH, des phénylcarboxylates substitués par alkyle en $C_1$-$C_{16}$, des phényl(alkyl en $C_1$-$C_{16}$)carboxylates, des phénolates en $C_6$-$C_{18}$, des chélates en $C_5$-$C_{26}$ de 1,3-dicétones ou d'esters β-cétocarboxyliques ou de dérivés de l'acide déshydroacétique, ainsi que des mercaptides à base d'esters d'acides mercaptocarboxyliques et des glycinates.

**7.** Composition de polymère selon la revendication 1, contenant comme constituant c) au moins un composé de la série des hydrotalcites de formule générale I

$$M^{2+}{}_{1-x}\cdot M^{3+}{}_{x}\cdot(OH)_2\cdot(A^{n-})_{x/n}\cdot mH_2O \qquad (I)$$

dans laquelle

$M^{2+}$ = Mg, Ca, Sr, Ba, Zn, Cd, Pb, Sn et/ou Ni,
$M^{3+}$ = Al, B ou Bi,
$A^n$ représente un anion de valence n,
n est un nombre de 1 à 4,
x est un nombre de 0 à 0,5,
m est un nombre de 0 à 2 et
A représente $OH^-$, $Cl^-$, $Br^-$, $I^-$, $ClO_4^-$, $HCO_3^-$, $CH_3COO^-$, $C_6H_5COO^-$, $CO_3^{2-}$, $SO_4^{2-}$,

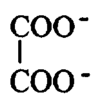,

$(CHOHCOO)_2^{2-}$, $(CHOH)_4CH_2OHCOO^-$, $C_2H_4(COO)_2^{2-}$, $(CH_2COO)_2^{2-}$, $CH_3CHOHCOO^-$, $SiO_3^{2-}$, $SiO_4^{4-}$, $Fe(CN)_6^{3-}$, $Fe(CN)_6^{4-}$ ou $HPO_4^{2-}$.

**8.** Composition de polymère selon la revendication 2, contenant comme constituant d) au moins une 1,3-dicétone de formule générale II ou IIa

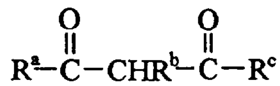 (II),

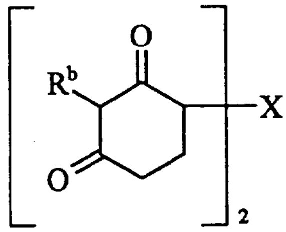 (IIa)

dans lesquelles

$R^a$ représente un groupe alkyle de 1 à 22 atomes de carbone, hydroxyalkyle en $C_5$-$C_{10}$, alcényle de 2 à 22 atomes de carbone, phényle, phényle substitué par -OH, alkyle en $C_1$-$C_4$, alcoxy en $C_1$-$C_4$ ou halogène, phényl(alkyle en $C_1$-$C_4$), un groupe de formule

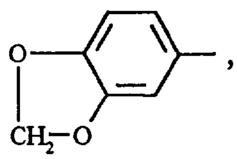

ou un groupe cycloalkyle de 5 à 12 atomes de carbone cycliques ou cycloalkyle de 5 à 12 atomes de carbone cycliques substitué par 1 à 3 groupes alkyle en $C_1$-$C_4$,

$R^c$ représente un groupe alkyle de 1 à 22 atomes de carbone, hydroxyalkyle en $C_5$-$C_{10}$, alcényle de 2 à 22 atomes de carbone, phényle, phényle ou phényl(alkyle en $C_1$-$C_4$) substitué par -OH, alkyle en $C_1$-$C_4$, alcoxy en $C_1$-$C_4$ ou halogène, un groupe de formule

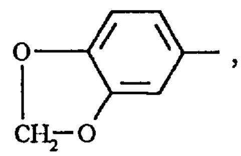

ou un groupe cycloalkyle de 5 à 12 atomes de carbone cycliques ou cycloalkyle de 5 à 12 atomes de carbone cycliques substitué par 1 à 3 groupes alkyle en $C_1$-$C_4$,

$R^b$ représente -H, un groupe alkyle de 1 à 18 atomes de carbone, alcényle de 2 à 12 atomes de carbone, phényle, phényle substitué par alkyle en $C_1$-$C_4$, phényl(alkyle en $C_1$-$C_4$), ou un groupe de formule

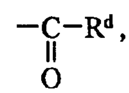

où $R^d$ représente un groupe $-CH_3$, $-C_2H_5$ ou phényle, ou bien

$R^a$ et $R^b$ représentent ensemble un reste tétraméthylène ou un reste tétraméthylène condensé avec un reste benzo, et

X représente un reste alkylène de 1 à 4 atomes de carbone.

**9.** Composition de polymère selon la revendication 2, contenant comme constituant d) au moins une 1,3-dicétone de formule IIb

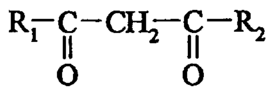 (IIb),

dans laquelle $R_1$ représente un groupe alkyle en $C_1$-$C_{10}$, hydroxyalkyle en $C_5$-$C_{10}$, phényle, hydroxyphényle, phé-

nylalkyle en $C_7$-$C_{10}$ ou phénylalkyle en $C_7$-$C_{10}$ substitué sur le cycle phényle par un groupe OH, et $R_2$ représente un groupe hydroxyalkyle en $C_5$-$C_{10}$, hydroxyphényle ou phénylalkyle en $C_7$-$C_{10}$ substitué sur le cycle phényle par un groupe OH, à condition que $R_2$ soit différent d'un groupe hydroxyphényle lorsque $R_1$ est un groupe phényle ou hydroxyphényle.

**10.** Composition de polymère selon la revendication 3, contenant comme constituant e) au moins un savon de Ca de formule générale Ca-$(OOCR^x)_2$, où $R^x$ représente un groupe alkyle de 1 à 22 atomes de carbone, un groupe alcényle de 2 à 22 atomes de carbone ou un groupe phényle, phényl(alkyle en $C_1$-$C_4$) ou (alkyl en $C_1$-$C_8$)phényle.

**11.** Composition de polymère selon la revendication 4, contenant comme dérivé de polyalkylpipéridine un composé de formule VIII

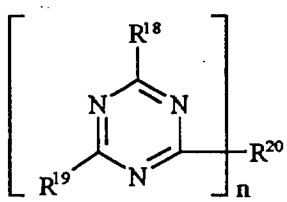

(VIII),

dans laquelle n est le nombre 1 ou 2 et $R^{18}$ représente un groupe de formule

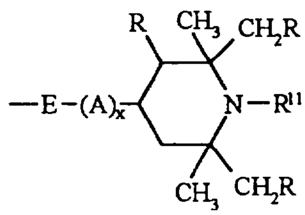

dans laquelle R représente un atome d'hydrogène ou un groupe méthyle et $R^{11}$ représente un atome d'hydrogène ou un radical oxyle, hydroxyle, alkyle en $C_1$-$C_{12}$, alcényle en $C_3$-$C_8$, alcynyle en $C_3$-$C_8$, aralkyle en $C_7$-$C_{12}$, alcoxy en $C_1$-$C_{18}$, cycloalcoxy en $C_5$-$C_8$, phénylalcoxy en $C_7$-$C_9$, alcanoyle en $C_3$-$C_8$, alcénoyle en $C_3$-$C_5$, alcanoyloxy en $C_1$-$C_{18}$, benzyloxy, glycidyle ou un groupe $-CH_2CH(OH(OH)-Z$, où Z est un atome d'hydrogène ou un groupe méthyle ou phényle, E est -O- ou $-NR^{11}$-, A est un groupe alkylène en $C_2$-$C_6$ ou $-(CH_2)_3$-O-, et x représente le nombre 0 ou 1, $R^{19}$ est identique à $R^{18}$ ou est l'un des groupes $-NR^{21}R^{22}$, $-OR^{23}$, $-NHCH_2OR^{23}$ ou $-N(CH_2OR^{23})_2$, lorsque n est 1, $R^{20}$ est identique à $R^{18}$ ou à $R^{19}$, et

lorsque n est 2, $R^{20}$ est un groupe -E-B-E-, où B représente un groupe alkylène en $C_2$-$C_6$ éventuellement interrompu par $-N(R^{21})$-, $R^{11}$ représente un groupe alkyle en $C_1$-$C_{12}$, cyclohexyle, benzyle ou hydroxyalkyle en $C_1$-$C_4$ ou un groupe de formule

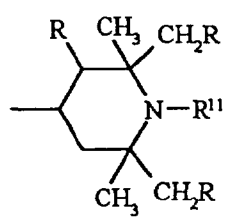

$R^{22}$ représente un groupe alkyle en $C_1$-$C_{12}$, cyclohexyle, benzyle ou hydroxyalkyle en $C_1$-$C_4$ et $R^{23}$ représente un atome d'hydrogène ou un groupe alkyle en $C_1$-$C_{12}$ ou phényle, ou bien $R^{21}$ et $R^{22}$ forment ensemble un groupe alkylène ou oxaalkylène en $C_4$-$C_5$, par exemple

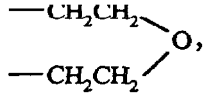, ou un groupe de formule 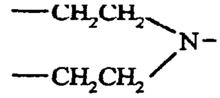

ou encore $R^{21}$ et $R^{22}$ représentent chacun un groupe de formule

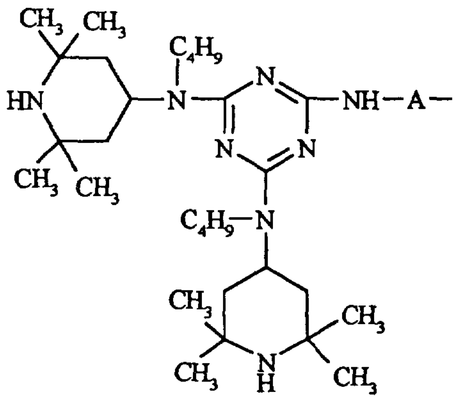

**12.** Composition de polymère selon la revendication 11, contenant l'un des composés ayant les formules

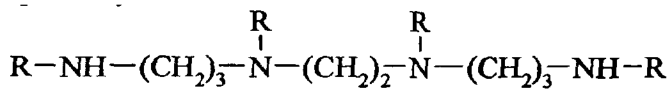

avec

R = 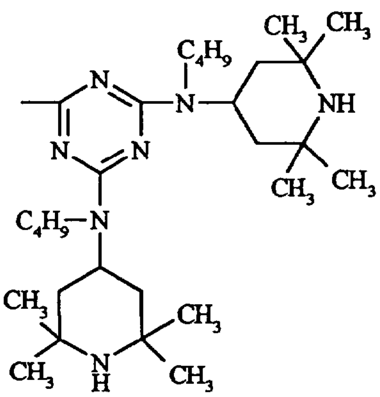

ou

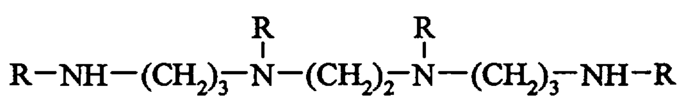

avec

R = 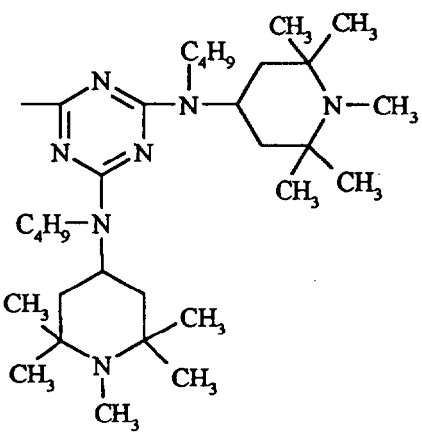

**13.** Composition de polymère selon la revendication 4, contenant un composé de formule

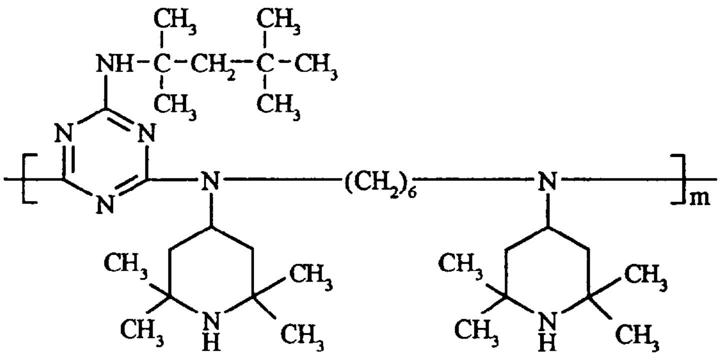

dans laquelle m représente un nombre de 2 à 200.

**14.** Composition de polymère selon la revendication 6, contenant comme constituant b) un composé organique du zinc, le composé organique du zinc étant un sel d'un acide carboxylique de 7 à 20 atomes de carbone ou un alkylphénolate en $C_7$-$C_{20}$.

**15.** Composition de polymère selon la revendication 7, contenant comme constituant c) au moins un composé de la série des hydrotalcites de formule générale I

$$M^{2+}_{1-x}\cdot Al_x\cdot (OH)_2\cdot (A^{n-})_{x/2}\cdot mH_2O \qquad (I)$$

dans laquelle $M^{2+}$ représente Mg ou une solution solide de Mg et Zn, $A^{n-}$ représente $CO_3^{2-}$, x est un nombre de 0 à 0,5 et m est un nombre de 0 à 2.

**16.** Composition de polymère selon la revendication 15, contenant au moins un des composés ayant les formules

$$4MgO\cdot Al_2O_3\cdot CO_2\cdot 9H_2O,$$

$$4MgO\cdot Al_2O_3\cdot CO_2\cdot 6H_2O,$$

$$ZnO\cdot 3MgO\cdot Al_2O_3\cdot CO_2\cdot 8\text{-}9H_2O,$$

ou

$$ZnO\cdot 3MgO\cdot Al_2O_3\cdot CO_2\cdot 5\text{-}6H_2O.$$

**17.** Composition de polymère selon la revendication 1, contenant, par rapport à la composition,

a) 0,01 à 1,5 partie en masse d'amines cycliques ou non cycliques à encombrement stérique,
b) 0,01 à 2 parties en masse de composé organique ou inorganique du zinc, et
c) 0,1 à 3 parties en masse de composés de la série des hydrotalcites.

**18.** Composition de polymère selon la revendication 1, contenant

d) 0,05 à 5 parties en masse d'une 1,3-dicétone.

**19.** Composition de polymère selon la revendication 1, contenant

e) 0,05 à 5 parties en masse d'un composé organique ou inorganique du calcium.

**20.** Composition de polymère selon la revendication 1, dans laquelle le polymère est un poly(chlorure de vinyle) ou contient du poly(chlorure de vinyle).